(19) Europäisches Patentamt
European Patent Office
Office européen des brevets

(11) EP 4 067 413 A1

(12) EUROPEAN PATENT APPLICATION

(43) Date of publication:
**05.10.2022 Bulletin 2022/40**

(21) Application number: **21165455.3**

(22) Date of filing: **29.03.2021**

(51) International Patent Classification (IPC):
***C08J 3/20*** *(2006.01)* ***C08J 3/22*** *(2006.01)*

(52) Cooperative Patent Classification (CPC):
**C08J 3/226; C08J 3/203;** C08J 2323/06; C08J 2333/06; C08J 2429/04; C08J 2433/06

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Smart Coloring GmbH**
**52074 Aachen (DE)**

(72) Inventor: **ROBERTZ, Bernd**
**52074 Aachen (DE)**

(74) Representative: **Michalski Hüttermann & Partner Patentanwälte mbB**
**Kaistraße 16A**
**40221 Düsseldorf (DE)**

# (54) COLOR MASTERBATCH FOR PRODUCING A COLORED PLASTIC ARTICLE AND METHOD FOR DECOLORING THE COLORED PLASTIC ARTICLE

(57) The present invention is directed to a color masterbatch for producing colored plastic articles, wherein the color masterbatch comprises:
- at least one carrier,
- at least one coloring agent, and
- at least one water-soluble or water-swellable component;

wherein the at least one carrier is an organic polymer having a molecular weight Mw ≥ 1000 g/mol and wherein the organic polymer is insoluble in water,
wherein an amount of the water-soluble or water-swellable component in the color masterbatch is ≥ 1 wt% to ≤ 50 wt%, preferably ≥ 2 wt% to ≤ 25 wt%, more preferably ≥ 4 wt% to ≤ 20 wt%, even more preferably ≥ 5 wt% to ≤ 15 wt%, based on the total weight of the color masterbatch,
wherein the coloring agent is a lake pigment, and
wherein a weight ratio of the coloring agent to the water-soluble or water-swellable component in the color masterbatch is 1:2 to 1:200, preferably 1:5 to 1:50.

EP 4 067 413 A1

## Description

The present invention relates to a color masterbatch for producing colored plastic articles.

Further, the present invention relates to a mixture comprising the above color masterbatch and a plastic basis material.

Further, the present invention relates to a method for producing a colored plastic article using the above color masterbatch and to a colored plastic article.

Further, the invention relates to a method for decoloring said colored plastic article.

## BACKGROUND OF THE INVENTION

Plastic articles, such as packaging and containers, are widely used in daily life, since they are easy to manufacture, rather inexpensive and lightweight. It is often desired that the plastic article has a specific color.

The coloring of plastics can be achieved by using color master batches, colored micro granules, so-called dry liquid colors or liquid colors. Colored plastic components can for example be produced from color master batch blended into a polymer prior to molding or extruding. The selection of the specific coloring method may vary based on economics, secondary operations and specific requirements of the end application.

Independent of the coloring process, the selection of the pigments and/or dyes as coloring agents depends not only on the desired color, but also on the plastic, on application, and the associated requirements, such as the use of the plastic article. In sensitive areas, such as food packaging or packaging for medicinal applications, contamination of the filling goods by a substance in the packaging must be avoided at all efforts. Furthermore, also a contamination of a user of the plastic package by a colored outer surface of the plastic package must be avoided. Hence, it is important that the dyes and/or pigments used, are immobilized and do not migrate from the plastic into the filling good or in an outer environment of the plastic article under the conditions in which the plastic article is used.

For dyes, i.e. organic molecules which are predominantly present in the colored plastic in a molecularly solved state, the prevention of migration is generally achieved by using dyes with a high molecular weight.

In the plastic industries mostly inorganic or organic pigments are used. Pigments are present in the plastic as finely distributed particles and do not migrate due to their size and particle character. Furthermore, the pigments are generally insoluble in most common solvents from water to organic solvents, oils or grease, which prevents bleeding or contact migration.

Even though pigments help producing highly color stable plastic articles, they are a disadvantage in the recycling process of the plastic article, as they cannot be removed from the plastic during mechanical recycling. The plastic articles may only be recycled at great expense by separating the articles in an additional sorting process according to their color, after having separated the articles according to the kind of plastic/polymer, in order to achieve high quality colored recycled material. When colorful plastics are mixed during regranulation, recyclates with undesirable color tones (brown, grey, black) result, so that these recyclates can only be used to a very limited extent.

Alternatively, in the recycling process the pigments within the plastic may be chemically modified for example by strong oxidation or reduction processes such that the pigments lose their chromophoric property. However, the destroyed pigments remain in the plastic and thus limit the use of the recylate. Furthermore, the oxidation or reduction agents are very aggressive and need to be used in high amounts, which is not environmentally friendly. Although it is possible to dissolve the plastics in chemical recycling by dissolving the colored plastic in suitable solvents, the effort involved is considerable and the use of organic solvents contradicts the idea of sustainability.

In other words, environmentally friendly and high-quality recycling depends on pigments that can be removed from the colored plastic article. Accordingly, there is a need to enhance the decolorability of plastic articles produced with pigments, in order to provide plastics article that are easily recyclable and still usable in sensitive areas, where a high color stability is needed.

## SUMMARY OF THE INVENTION

It is an object of the invention to provide a color masterbatch for producing colored plastic articles, wherein the color masterbatch comprises:

- at least one carrier,
- at least one coloring agent, and
- at least one water-soluble or water-swellable component;

wherein the at least one carrier is an organic polymer having a molecular weight Mw ≥ 1000 g/mol and wherein the organic polymer is insoluble in water,

wherein an amount of the water-soluble or water-swellable component in the color masterbatch is ≥ 1 wt% to ≤ 50 wt%, preferably ≥ 2 wt% to ≤ 25 wt%, more preferably ≥ 4 wt% to ≤ 20 wt%, even more preferably ≥ 5 wt% to ≤ 15 wt%, based on the total weight of the color masterbatch, wherein the coloring agent is a lake pigment, and wherein a weight ratio of the coloring agent to the water-soluble or water-swellable component in the color masterbatch is 1:2 to 1:200, preferably 1:5 to 1:50.

Furthermore, it is an object of the invention to provide a mixture of the above color masterbatch and a plastic basis material in a weight ratio of 20:80 to 1:99, preferably of 10:90 to 2:98, more preferably of 5:95 to 3:97 (color masterbatch: plastic basis material), wherein the plastic basis material comprises at least one basis polymer having a molecular weight Mw ≥ 1000 g/mol.

Furthermore, it is an object of the invention to provide a method for producing a colored plastic article comprising the steps:

a) Mixing the above color masterbatch with a plastic basis material in an extruder in a weight ratio of 20:80 to 1:99, preferably of 10:90 to 2:98, more preferably of 5:95 to 3:97 (color masterbatch: plastic basis material), wherein the plastic basis material comprises at least one basis polymer having a molecular weight Mw ≥ 1000 g/mol, or
b) Providing the above mixture in an extruder, and
c) Forming the colored plastic article by a polymer processing technique.

Furthermore, it is an object of the invention to provide a colored plastic article produced by the above method.

Furthermore, it is an object of the invention to provide a colored plastic article comprising

- a plastic basis material,
- at least one carrier,
- at least one coloring agent,
- at least one water-soluble or water-swellable component,

wherein the plastic basis material comprises at least one basis polymer,
wherein the amount of the plastic basis material in the colored plastic article is ≥ 80 wt% to ≤ 99 wt%, preferably ≥ 90 wt% to ≤ 98 wt%, more preferably ≥ 95 wt% to ≤ 97 wt%, based on the total weight of the colored plastic article,
wherein the amount of the at least one water-soluble or water-swellable component in the colored plastic article is ≥ 0.01 wt% to ≤ 10 wt%, preferably ≥ 1 wt% to ≤ 8 wt%, more preferably ≥ 2 wt% to ≤ 4 wt%, or even more preferably ≥ 0.15 wt% to ≤ 0.75 wt%, based on the total weight of the colored plastic article,
wherein the at least one basis polymer and the at least one carrier is an organic polymer having a molecular weight Mw ≥ 1000 g/mol and wherein the carrier is insoluble in water,
wherein the coloring agent is a lake pigment, and
wherein a weight ratio of the coloring agent to the water-soluble or water-swellable component in the colored plastic article is 1:2 to 1:200, preferably 1:5 to 1:50.

The color masterbatch, the mixture of the color masterbatch and the plastic basis material, the method for producing the colored plastic article, and the colored plastic article have the advantage that the colored plastic article has a high color stability under use conditions and can be decolored under recycling conditions.

Furthermore, it is an object of the invention to provide a method for decoloring the above plastic article, comprising the steps of

a) shredding the colored plastic article to a granulate and/or a powder,
b) exposing the granulate and/or powder to a decoloring bath for about ≥ 1 minute to about ≤ 240 minutes, preferably about ≥ 5 minute to about ≤ 180 minutes, more preferably about ≥ 10 minute to about ≤ 60 minutes, wherein the decoloring bath has a temperature above a glass transition temperature $T_g$ of the colored plastic article and below a melting temperature $T_m$ of the colored plastic article and/or has a temperature ≥ 80 °C to ≤ 130 °C,

wherein the decoloring bath comprises

- water,
- at least one polar solvent, and
- an oxidizing agent or a reducing agent and/or a polar decoloring agent,

wherein the decoloring bath has a pH about ≥ 10 or about ≤ 4, preferably about ≥ 11 or about ≤ 3, more preferably about ≥ 12 or about ≤ 2, and wherein the pH of the decoloring bath is adjusted by adding a base, preferably NaOH and/or an acid, preferably HCl.

The basic idea of the invention is to use lake pigments in combination with water soluble or water swellable components in a color masterbatch, in a mixture of the color masterbatch and a plastic basis material and/or in a plastic article. The lake pigments as coloring agents have the advantage that they provide highly color stable plastic articles under use conditions, since the lake pigments do not migrate. Furthermore, since the lake pigments are chemically salts, as mostly aluminium salts amphoteric, dissolution of the lake pigments is possible in both alkaline and acidic conditions during decoloring of the plastic article in the decoloring bath. Generally, lakes are understood to be the precipitated salts of food dyes. In the present invention, lakes are understood to be all acidic and/or anionic dyes which are converted from water-soluble dyes into predominantly water-insoluble pigments by reaction with multivalent metal ions. However, in order to exploit the advantage of lake pigments, the decoloring bath must be able to attack the lake pigment. Since most plastics in which the lake pigment is incorporated are usually resistant to water, alkalis or acids, water-soluble or water-swellable components are incorporated in the colored plastic article in an amount $\geq$ 0.01 wt%, preferably $\geq$ 1 wt%, more preferably $\geq$ 2 wt%, or even more preferably $\geq$ 0.15 wt%, based on the total weight of the colored plastic article. Accordingly, the water-soluble or water-swellable components are incorporated in the color masterbatch, which is used to produce the colored plastic article in an amount of $\geq$ 1 wt%, preferably $\geq$ 2 wt%, more preferably $\geq$ 4 wt%, or even more preferably $\geq$ 5 wt%, based on the total weight of the color masterbatch. These water-soluble or water-swellable components ensure that the colored plastic article and the plastic article produced with the color masterbatch dissolves or swells, when contacted with the decoloring bath and thus the decoloring bath can access the lake pigment. However, if the water-soluble or water-swellable components are present in a high amount in the plastic article and in the color masterbatch, the usability of the colored plastic article and of the plastic article produced with the color masterbatch is impaired. Thus, the amount of water-soluble or water-swellable component is limited to $\leq$ 10 wt%, preferably to $\leq$ 8 wt%, more preferably to $\leq$ 4 wt%, or even more preferably to $\leq$ 0.75 wt%, based on the total weight of the colored plastic article. Accordingly, in the color masterbatch the amount of water-soluble or water-swellable component is limited to $\leq$ 50 wt%, preferably $\leq$ 25 wt%, more preferably $\leq$ 20 wt%, even more preferably $\leq$ 15 wt%, based on the total weight of the color masterbatch. In order to ensure the decolorability of the colored plastic article and of the plastic article produced with the color masterbatch, the weight ratio of the coloring agent to the water-soluble or water-swellable component in the color masterbatch as well as in the plastic article is 1:2 to 1:200, preferably 1:5 to 1:50.

With regard to the method for producing the colored plastic article, it is also possible to dose a color masterbatch not comprising a water-soluble or water-swellable component and the water-soluble or water-swellable component separately in the manufacturing process of the plastic article, thus achieving the mixture of the color masterbatch and the plastic basis material. However, in manufacturing processes of plastic articles, usually only single-screw extruders are used, whose disintegration and mixing performance are significantly lower compared to the twin-screw extruders used in the production of the color masterbatches. The separate dosing of a color masterbatch not comprising a water-soluble or water-swellable component and the water-soluble or water-swellable component in the manufacturing process of a plastic article therefore harbors the risk of insufficiently intimate mixing, so that decolorization of the plastic article in a decolorization process may be impaired.

Thus, using the color masterbatch a highly color stable and still decolorizable plastic article can be produced. The lake pigments as coloring agents in combination with the water-soluble or water-swellable compound make an easy and environmentally friendly recycling of the colored plastic article possible, making use of the dissolution of the lake pigment in the decoloring bath.

Preferably, the method for decoloring the colored plastic article allows to recover at least 85 % of the plastic basis material of the plastic article and allows to reuse the plastic basis material for producing further plastic articles. Furthermore, the recycling does not rely on dissolving the plastic basis material in an organic solvent, but rather on a disintegration process of the plastic article and the conversion of the lake pigments into the solvable compounds in the decoloring bath.

## Coloring agent

As already mentioned, the coloring agent in the color masterbatch, in the mixture of the color masterbatch and the plastic basis material, and in the colored plastic article is a lake pigment. Lake pigments are coloring agents that are made by precipitating a dye with an inert binder, usually a metallic salt. Unlike pigments made from ground minerals, lake pigments are chemically salts from organic molecules. The dyes - i.e. the organic molecules - used for generating the lake pigments are water soluble - however the lake pigment itself is almost insoluble in water. Lake pigments are generated by converting water-soluble, anionic and/or acidic dyes into water-insoluble pigments mostly by means of $KAl(SO_4)_2$ (alaun), $(Na,Ca)_{0.3}(Al,Mg)_2Si_4Oi_4(OH)_{2-n}H_2O$ (montmorillonite), $Mg_6Al_2[(OH)_{16}|CO_3]\cdot 4H_2O$ (Hydrotalcit), and/or $Al_2(SO_4)_3$ (alum) in basic solution ($Na_2CO_3$). Besides aluminium, other metals such as calcium, barium, magnesium, zinc, tin, iron, chromium or nickel can be used. In the context of this application water insoluble means a solubility in double-distilled water at 25 °C of < 0.1 mol/l. As already mentioned, lakes are generally understood to be the precipitated salts of food dyes. In the present invention, lake pigments are understood to be all acidic and/or anionic dyes which are

converted from water-soluble dyes into almost water-insoluble pigments by reaction with metal ions.

Furthermore, in the present invention lake pigments are also understood to be precipitated coordination complexes of polyvalent metal cations with acidic and/or anionic dyes. Beside the acidic and/or anionic functional group, these dyes generally comprise an adjacent functional group, e.g. a hydroxyl group, which additionally forms a coordinative bond with the polyvalent metal cation. The metal cations are often referred to as mordant and the corresponding coordination complexes as mordant dyes. In case the metal cation is chromium also the term chromatin dye is used. The terms lake pigment and mordant dye are used synonymously here.

An advantage of using lake pigments as coloring agent in the color masterbatch and in the colored plastic article is that the lake pigment does not migrate within the plastic article. Thus, high color stability of the colored plastic article can be achieved. Lake pigments can also be processed like pigments, which means that lake pigments are easily dispersible in fatty media or dry mixtures. Lake pigments are stable in a broad pH range and generally have higher light and heat resistance than the dyes from which they are derived. Furthermore, the formation of the lake pigment from the dye is a reversible chemical reaction, thus the plastic article can be decolorized under specific decolorizing conditions in which the lake pigment turns back into the dye and the metallic salt, in order to exploit the solubility of the dye in water.

According to a preferred embodiment of the invention the coloring agent is selected from the lake pigments comprising aluminum, calcium and barium salts. In other words, preferably aluminum, calcium and/or barium compounds are used in order to make the lake pigment from the dye.

According to a preferred embodiment of the invention the dyes used for generating the lake pigment are organic molecules having an aromatic structure. Furthermore, the dyes used for making the lake pigment preferably have a molecular weight Mw in the range of about ≥ 250 g/mol to about ≤ 800 g/mol. Furthermore, the dye used for generating the lake pigment is an acidic dye and/or an anionic dye. Preferably the dye comprises at least one acid group.

According to a further preferred embodiment of the invention the lake pigment has a pure dye content of 10 wt% to 50 wt%, preferable 15 wt% to 40 wt%. Due to the manufacturing process of the lake pigment, the pure dye content of the lake pigment is between 15 wt% and 40 wt%, rarely up to 45 wt%. The further components in the lake pigment are salts, that precipitate together with the lake pigment in the manufacturing process of the lake pigment. The further components do not impair the color masterbatch, the mixture, and/or the colored plastic article.

According to a further preferred embodiment of the invention the coloring agent is a lake pigment allowed as food color in the European Union and/or the United States of America. Many lake pigments are allowed as food colorant according to the annex of the Regulation (EC) No. 1333/2008 in the European Union or under the Federal Food, Drug, and Cosmetic Act Chapter VII, section 721 further elaborated in the regulations in Title 21 of the Code of Federal Regulations Parts 73, 74, 81 and 82 in the United States of America. Thus, using these lake pigments enables high safety for sensitive areas, such as food packaging or packaging for medicinal applications, since even in the very unlikely case that the lake pigment contaminates the substance in the packaging no health threat exists for the consumer.

More preferably the lake pigment is selected from the group comprising the following chemical formulas A1 to A14 according to table 1:

Table 1

| Description | Chemical structure of the dye used for making the lake pigment |
|---|---|
| A1: Allura Red<br>A1 L: Lake Allura Red: Precipitated as Al-salt | 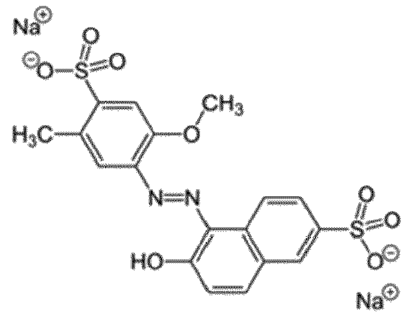 |

(continued)

| Description | Chemical structure of the dye used for making the lake pigment |
|---|---|
| A2: Tartrazine<br>A2 L: Lake Tartrazine: Precipitated as Al-salt | 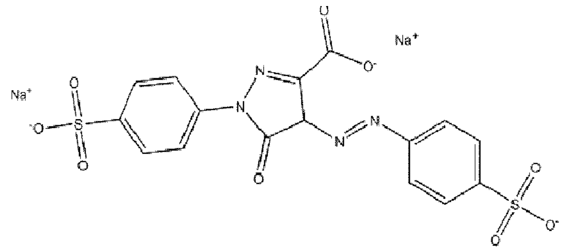 |
| A3: Sunset Yellow<br>A3 L: Lake Sunset Yellow: Precipitated as Al-salt | 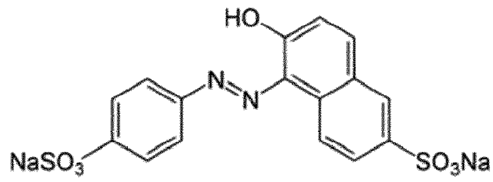 |
| A4: Brilliant Blue FCF<br>A4 L: Lake Brilliant Blue FCF: Precipitated as Al-salt | 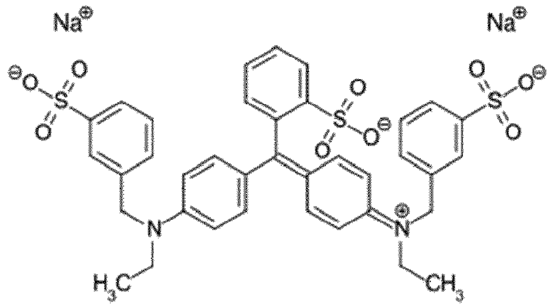 |
| A5: Indigo Carmine<br>A5 L: Lake Indigo Carmine: Precipitated as Al-salt | 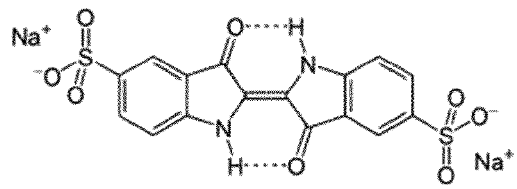 |
| A6: Erythrosine<br>A6 L: Lake Erythrosine: Precipitated as Al-salt | 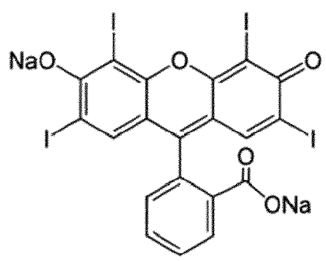 |
| A7: Amaranth<br>A7 L: Lake Amaranth: Precipitated as Al-salt | 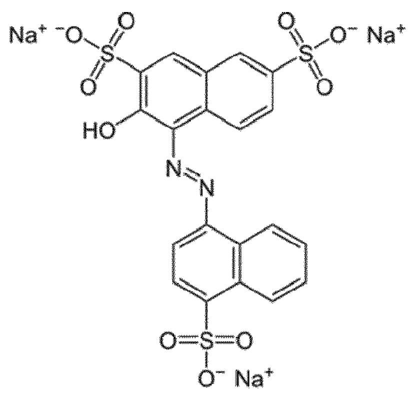 |

(continued)

| Description | Chemical structure of the dye used for making the lake pigment |
|---|---|
| A8: Carmoisine<br>A8 L: Lake Carmoisine: Precipitated as Al-salt | 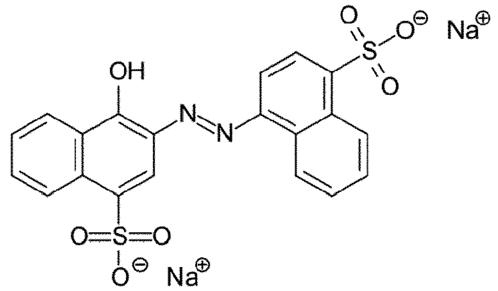 |
| A9: Ponceau 4R<br>A9 L: Lake Ponceau 4R: Precipitated as Al-salt | 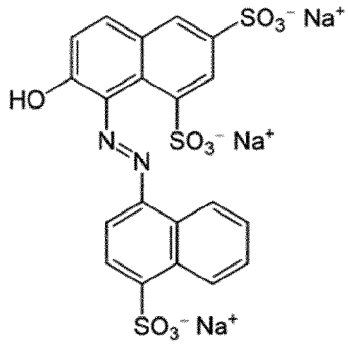 |
| A10: Quinoline Yellow<br>A10 L: Lake Quinoline Yellow: Precipitated as Al-salt | 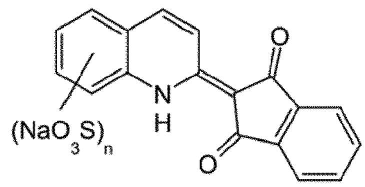 |
| A11: Mordant Blue 9<br>A11 L: Lake Mordant Blue 9: Precipitated as Al-salt | 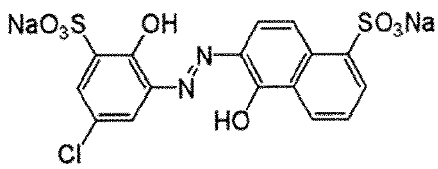 |
| A12 L: Pigment Red 57:1 (Litholrubin BK)<br>Precipitated as Ca-salt: calcium (4Z)-4-[(4-methyl-2-sulfonatophenyl)hydrazono]-3-oxo-2-naphthalenecarboxylate | 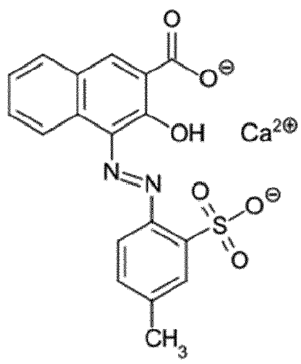 |
| A13 L: Pigment Yellow 62<br>Precipitated as Ca-salt calcium,4-[[4-(2-methylanilino)-2,4-dioxobutyl]diazenyl]-3-nitrobenzenesulfonate | 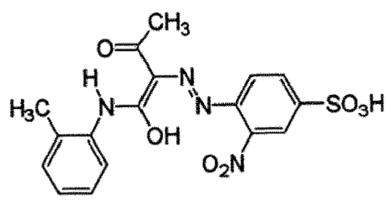 |

(continued)

| Description | Chemical structure of the dye used for making the lake pigment |
|---|---|
| A14 L: Pigment Red 48:2<br>Precipitated as Ca-salt: calcium-4-[(5-chlor-4-methyl-2-sulfonatophenyl)azo]-3-hydroxy-2-naphthoate | 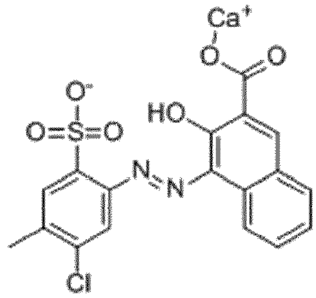 |

The lake pigments A1 L to A10 L and A12 in table 1 have the following color index number and EEC No. as food colorant in the European Union and as FD &C No. as food colorant in the United States of America respectively:

Table 2

| | Common Name | Color Index No. | EEC No. | FD & C No. |
|---|---|---|---|---|
| A1 L | Lake Allura Red | 16035 (PD) | E 129 | Red 40 |
| A2 L | Lake Tartrazine | 19140:1 | E 102 | Yellow 5 |
| A3 L | Lake Sunset Yellow | 15985:1 | E 110 | Yellow 6 |
| A4 L | Lake Brilliant Blue FCF | 42090:2 | E 133 | Blue 1 |
| A5 L | Lake Indigo Carmine | 73015 (PD) | E 132 | Blue 2 |
| A6 L | Lake Erythrosine | 45430:1 | E 127 | - |
| A7 L | Lake Amaranth | 16185:1 | E 123 | - |
| A8 L | Lake Carmoisine | 14720:1 | E 122 | - |
| A9 L | Lake Ponceau 4R | 16255:1 | E 124 | - |
| A10 L | Lake Quinoline Yellow | 47005:1 | E 104 | - |
| A12 L | C.I. Pigment Red 57:1 | 15850:1 | E 180 | Red No. 7 |

The lake pigment may be a ready-to-use lake pigment, i.e., a lake pigment comprising additives to ensure a homogenous distribution of the lake pigment in the color masterbatch. Alternatively, the lake pigment may be a lake pigment not comprising any additive.

## Carrier

As already mentioned, the carrier is an organic polymer having a molecular weight Mw ≥ 1000 g/mol, preferably Mw ≥ 1200 g/mol, more preferably Mw ≥ 1500 g/mol and wherein the organic polymer is insoluble in water.

In the context of this invention being insoluble in water means that the organic polymer does not dissolve and/or disperse in water.

Dissolution and/or dispersion of organic polymers in water lead to a change of the physical properties of the water. Thus, in the context of the invention not being soluble and/or dispersible means that the viscosity of the water, determined by EN ISO 3219 does not change for more than 1 % and/or conductivity, determined by DIN EN 27888 of the water does not change for more than 5 % due to the presence of the 1 platelet according to ISO 294-3 (cavity dimensions: W x Lx T = 62 x 62 x 1.1 $mm^2$) of the organic polymer in 100 g distilled water.

Furthermore, in the context of this invention being insoluble in water also means that the organic polymer does not swell in water. Since many polymers absorb water or moisture to some degree which may lead to swelling, in the context of the invention not swelling in water means, that the water absorption of the organic polymer is < 5 wt%, determined by ASTM D570 or ISO 62. In other words, not swelling in water means that the increase in weight percent

due to water absorption is < 5 wt% for the carrier.

In general, the carrier may be any polymer or any mixture of polymers and may be selected according to the use of the plastic article and or the material of the plastic article that is to be colored by the color masterbatch. Preferably, the carrier is chosen to be compatible with the plastic basis material of the mixture and/or of the plastic article that is to be colored by the color masterbatch. The carrier may be the same as the plastic basis material of the mixture and/or the plastic article that is to be colored by the color masterbatch. It is possible that the color masterbatch comprise one carrier. However, it is also possible that the color masterbatch comprises more than one carrier, for example a first carrier and a second carrier, wherein the first carrier is selected different to the second carrier.

According to a preferred embodiment of the invention the carrier is selected from the group comprising thermoplastic and thermoplastic elastomer and/or the carrier is not a thermosetting polymer.

Preferably the carrier is selected from the organic polymers comprising poly(methyl methacrylate) (PMMA), poly methacrylate (PMA), poly (vinyl acetate) (PVA), polypropylene (PP), polyethylene (PE), polyoxymethylene (POM), polystyrene (PS), polyurethane (PU), silicone, and acrylonitrile butadiene styrene (ABS), polyalkylenes, polybutylene (PB). Furthermore, the carrier may be co-polymers of the aforementioned organic polymers.

Preferably the carrier is selected from the organic polymers comprising

- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *n*-Butyl and *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- aminoalkyl (meth)acrylates, preferably 2-aminoethyl (meth)acrylate polymers
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- acrylonitrile polymers;
- vinyl ester polymers, preferably vinyl acetate polymers;
- styrene polymers, substituted styrenes polymers with an alkyl substituent in the side chain, preferably $\alpha$-methylstyrene and $\alpha$-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- polyurethane (PU),
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- poly(1-naphthylamine)-camphorsulphonic acid.

Other organic polymers such as amorphous co-polyester, which can be used as carriers are known under the tradename Akestra 90, 100 and 110.

**Water-soluble or water-swellable component**

As already mentioned, the color masterbatch, the mixture, and the colored plastic article comprises a water-soluble or water-swellable component in order to enable decolorability of the colored plastic article. The water-soluble or water-swellable component is preferably a compound that dissolves, disperses, and/or swells in water and/or under the conditions present in the decoloring bath. Thus, the decoloring bath can access the lake pigment within the colored plastic article.

To this regard, the water-soluble or water-swellable component is preferably a water-soluble polymer, a water-swellable compound, a disintegrating agent, or mixtures thereof.

With regard to the recyclability of the colored plastic article, which may be produced with the color masterbatch, the water-soluble polymers have the advantage that they dissolve in the decoloring bath in the decolorizing process and thus after decolorization these polymers are not present in the plastic article any more or only to a negligible extent. Thus, a contamination of the decolorized plastic with the water-soluble polymers is avoided and the recyclability of the plastic article is increased. In contrast, the water-swellable compounds remain in the plastic even after decolorization, thus impairing the recyclability of the plastic article. However, the water-swellable compounds have the advantage of ensuring higher color stability, compared to water-soluble polymers. Furthermore, since the water-soluble polymers dissolve in the decoloring bath, they contaminate the decoloring bath. However, purification of the decoloring bath is possible by standard processes involving precipitation reactions and/or flocculation.

Water-soluble polymer

According to a preferred embodiment of the invention the water-soluble polymer has a molecular weight Mw $\geq$ 1000 g/mol, preferably Mw $\geq$ 1200 g/mol, more preferably Mw $\geq$ 1500 g/mol.

In the context of this application, a polymer is considered water soluble if the weight loss of a sample of the water-soluble polymer according to ISO 294-3 (cavity dimensions: W x L x T = 62 x 62 x 1.1 $mm^2$) is more than 2 wt% when stored or treated according to either of the following method 1 or method 2. The weight loss in % is calculated according to:

$$weight\ loss\ in\ \% = \frac{conditioned\ weight\ after\ test - conditioned\ weight\ before\ test}{conditioned\ weight\ before\ test}\ x\ 100$$

Before testing the specimens are dried in an oven at 60°C for 48h and then placed in a desiccator to cool. Immediately upon cooling the specimens are weighed.

For method 1 the specimens are then emerged in 500 mL of water at 23°C for 24 hours. Specimens are removed, patted dry with a lint free cloth, and weighed.

For method 2 the specimens are then emerged in 500 mL of boiling water (100 °C) for 30 min. Specimens are removed, patted dry with a lint free cloth, and weighed.

Water-soluble polymers usually have hydrophilic groups as substituents and/or incorporated into the backbone of the polymer. The hydrophilic groups may be nonionic, anionic, cationic or amphoteric. In other words, the monomer units of water-soluble polymers have a significantly higher number of heteroatoms such as nitrogen (N), oxygen (O), sulfur (S) or halogens (esp. F, Cl, Br) compared to water insoluble polymers. This results in a higher polarity and thus better solubility compared to insoluble polymers.

According to a preferred embodiment of the invention the water-soluble polymer is selected from the group comprising polyelectrolytes, non-ionic polymers, hydrophobic-associating polymers, and water soluble polysiloxanes.

a) Polyelectrolytes

Polyelectrolytes are polymers that have charged groups. They can be divided into polycations (positively charged), polyanions (negatively charged) or amphoteres (zwitterions, positively and negatively charged). Polyelectrolytes include proteins, but also numerous synthetically produced polymers.

Useful polyelectrolytes include but are not limited to poly carboxylic acids (collective term), poly acrylic acid (carbomer), poly methacrylic acids, poly maleic acid, maleic acid co- and terpolymers, poly sulfonic acids such as sodium poly styrene sulfonat, acrylic ester-acrylic acid copolymers as available from Belland Technology, sulfonated acrylic copolymers, poly vinyl sulphuric acid, phosphino poly carboxylates, poly phosphoric acids, alginates, ligno sulphonates, naphtyl sulphonates, Pectins, quaternary polyamines (collective term), partially hydrolyzed polyacrylamide (HPAM), acrylamide copolymers, poly vinyl amines, poly ethylene imines, polyquaternium especially Polyquaternium 6 (pDADMAC), dicyandiamide resins, cationic starch, poly vinyl pyridine, poly vinyl ammonium chloride, poly saccharides, acrylamide-acrylic acid-DMAEA-MeCl or DADMAC-acrylic acid, polybetaines in which the charges are paired.

b) Water-soluble non-ionic polymers

Preferably the group of water-soluble non-ionic polymers include but are not limited to polyethylene oxides, polyethylene oxide-polypropylene oxide copolymers, poly amide, poly-N-vinyl pyrrolidone, (N)-vinyl pyrrolidone-vinyl imidazole-copolymers, poly vinyl alcohol (PVAL or PVOH), polyacrylamide (PAM), acrylamide copolymers or poly(vinylmethyl ether) (PVME).

c) Water-soluble hydrophobically associating polymers

Water-soluble hydrophobically associating polymers (AP) are water-soluble polymers that contain a small number i.e. < 1 mol% of hydrophobic groups attached directly to the polymer backbone.

d) Water soluble polysiloxanes

Water soluble polysiloxanes are polymerised siloxanes or polysiloxanes, which are inorganic-organic polymers with a silicon-oxygen backbone.
Useful water-soluble polymers are available under the tradename Mowiflex from Kuraray Europe GmbH, or Sokalan from BASF SE.

Water-swellable compound

According to a preferred embodiment of the invention, the water-swellable compound is an inorganic compound or is a polymer having a molecular weight Mw ≥ 1000 g/mol, preferably Mw ≥ 1200 g/mol, more preferably Mw ≥ 1500 g/mol, wherein the water-swellable compound has a swelling capacity of ≥ 25 wt%, preferably ≥ 100 wt%, more preferably ≥ 200 wt%.
The swelling capacity of the water-swellable compound is determined according to ASTM D570 or ISO 62. Water-swellable compound are usually crosslinked polymer networks that have hydrophilic groups as substituents and/or incorporated into the backbone of the polymer. Because of the inherent cross-links, the water-swellable compound preferably does not dissolve in water.
Furthermore, instead of polymers inorganic compounds that show a high swelling capacity can be used as water-swellable compounds, especially phyllosilicates such as bentonite, preferably montmorillonite.
In principle, all the above-mentioned water-soluble polymers that can be covalently or ionically crosslinked are swellable in their crosslinked form. The swelling capacity in a solvent or swelling agent such as water is determined, among other things, by their degree of cross-linking.
According to a preferred embodiment of the invention the water-swellable compound is selected from the group comprising bentonite, preferrebly montmorillonite; cross-linked poly acrylamide and its copolymers, starch, cellulose, cellulose derivatives such methyl cellulose (MC), microcrystalline cellulose (MCC), hydroxypropylmethyl cellulose (HPMC), ethylhydroxyethyl cellulose (MHEC), hydroxypropyl cellulose (HPC), hydroxyethyl cellulose (HEC), sodium carboxymethyl cellulose (NaCMC) and carboxymethylcellulose; crosscarmellose, sodium croscarmellose, crospovidone, sodium starch glycolate. alginic acids, dextrans and cross-linked polyvinylpyrrolidones, cross-linked poly(vinyl alcohol) and copolymers such as Ethylene-vinyl alcohol copolymers with different degrees of saponification, cross-linked polyethylene oxide and starch grafted copolymer of polyacrylonitrile.
Useful water-swellable compounds are available under the tradenames Ac-Di-Sol from DuPont de Nemours, Disolcel from chemopharma Chemikalien- und Pharmazeutika Handelsges.m.b.H., Solutab from Roquette Frères, Vivasol from JRS PHARMA GmbH & Co. KG.

Disintegrating agent

Furthermore, there are compounds whose solubility is dependent on the conditions of the solvent e.g. its pH or the solubility is produced by a chemical reaction between the component and the solvent, since only a chemical reaction between the compound and the solvent leads to the dissolution of the compound. For example, some manufacturers specify specific pH values for their polymers at which the polymers first become water-soluble (e.g. various BellandPolymers types from Belland Technology: Belland Polymer 88410; soluble at pH > 10).
Accordingly, the disintegrating agent can be a polymer having a molecular weight Mw ≥ 1000 g/mol, preferably Mw ≥ 1200 g/mol, more preferably Mw ≥ 1500 g/mol, that is only soluble in water below or above a specific pH values e.g. through the conversion of acids to the corresponding salts in an alkaline environment or the conversion of amines into ammonium groups in an acidic environment.
In the context of this application, a polymer is considered a disintegrating agent, when the weight loss of a

sample of the disintegrating agent according to ISO 294-3 (cavity dimensions: W x L x T = 62 x 62 x 1.1 $mm^2$) is more than 2 wt% when treated according to the following method 3. The weight loss in % is calculated according to:

$$weight\ loss\ in\ \% = \frac{conditioned\ weight\ after\ test - conditioned\ weight\ before\ test}{conditioned\ weight\ before\ test}\ x\ 100$$

Method 3: Before testing the specimens are dried in an oven at 60°C for 48h and then placed in a desiccator to cool. Immediately upon cooling the specimens are weighed. Afterwards the specimens are emerged in 500 mL of water having a pH ≥ 10 or a pH ≤ 4 for 24 hours at 80°C. Specimens are removed, patted dry with a lint free cloth, and weighed.

According to a preferred embodiment of the invention, the disintegrating agent is selected from the group comprising poly glycolide, polylactide, poly hydroxy propionate, poly hydroxy butyrate, poly ε-caprolactone, glycolized or amorphous aliphatic-aromatic polyesters, glycolized or amorphous polyethylene terephthalate (PET-G or A-PET), polytrimethylenterephthalte (PTT) and polybutylenterephthalate (PBT).

Useful disintegration agents are also available under the tradename Belland Polymers from Belland Technology.

In the case of saponification of esters, further additives can be added to the decoloring bath that accelerate the saponification of the esters, such as quaternary ammonium compounds like Peristal PEA available from Textilchemie Dr. Petry GmbH.

## Further components

The color masterbatch, the mixture, and the colored plastic article may comprise further components that enhance the accessibility of the decoloring bath to the coloring agent, and thus improve the decolorability of the colored plastic article. Such further components can be substances that generate gases when coming into contact with the decoloring bath, organic acids and/or salts.

a) organic acids and salts

According to a preferred embodiment the color masterbatch, the mixture, and the colored plastic article may comprise further components that enhance the accessibility of the decoloring bath to the coloring agent, and thus improve the decolorability of the colored plastic article.

According to the above and according to a preferred embodiment of the invention, the color masterbatch further comprises in an amount of ≥ 0.1 wt% to ≤ 10 wt% based on the total weight of the color masterbatch

- an organic acid having a melting point $T_m$ > 100 °C and a solubility in double-distilled water and/or alkaline solution > 0.1 kg/L at 25 °C, such as tartaric acid, citric acid; amino- or hydroxy- substituted straight, branched, saturated and/or unsaturated, aliphatic C5 to C9 carboxylic acids such as hydroxyvaleric acid and hydroxycaproic acid, C4 to C7 dicarbonic acids like glutaric acid or adipic acid; and/or
- a salt selected from the group comprising

  a) inorganic salts of alkali metals, alkaline earth metals, and/or elements of the 3rd main group of the PSE such as sodium chloride and sodium nitrate;
  b) organic salts of alkali metals and/or alkaline earth metals of carboxylic acids such as acetate, citrate, tartrate, and branched, saturated and/or unsaturated, aliphatic C5 to C9 carboxylic acids such as valeric acid and caproic acid; and
  c) hydroxides of alkali metals, alkaline earth metals, and Aluminum, such as NaOH, $Mg(OH)_2$, and $Al(OH)_3$.

The organic acid having a melting point $T_m$ > 100 °C as well as the salts have the advantage that they do not cause problems when the color masterbatch and/or the mixture comprising the color masterbatch is processed in an extruder at elevated temperatures. The solubility in double-distilled water and/or alkaline solution allows that the organic acid dissolve under the decoloring conditions. Solubility in alkaline solution refers to an NaOH solution having pH ≥ 10. Compared to the gas generators, the organic acids and the salts do not produce gas when dissolving in the decoloring bath.

Since the organic acids and the salts may have influence on the density of the plastic article, the amount organic acids and/or the salts in the color masterbatch is preferably limited to ≤ 10 wt% based on the total weight of the color masterbatch. Accordingly, the colored plastic article produced with the color masterbatch may comprise in an amount of ≥ 0.001 wt% to ≤ 2 wt%, preferably ≥ 0.01 wt% to ≤ 1 wt%, more preferably ≥ 0.02 wt% to ≤ 0.1 wt% based on the

total weight of the color plastic article the organic acids and/or the salts.

b) Gas generators

Furthermore, compounds that produce gas when reacting may also be used in the color masterbatch, the mixture, and the colored plastic article. According to a preferred embodiment of the invention the color masterbatch further comprises in an amount of ≥ 0.1 wt% to ≤ 10 wt% based on the total weight of the color masterbatch a gas generator selected from the group comprising hydrogen carbonates and carbonates such as $NaHCO_3$ and $Na_2CO_3$. Accordingly, the colored plastic article produced with the color masterbatch may comprise in an amount of ≥ 0.001 wt% to ≤ 2 wt%, preferably ≥ 0.01 wt% to ≤ 1 wt%, more preferably ≥ 0.02 wt% to ≤ 0.1 wt% based on the total weight of the color plastic article the gas generator.

## Crosslinking agent

According to a preferred embodiment of the invention, the color masterbatch further comprises a crosslinking agent in an amount of ≥ 0.1 wt% to ≤ 10 wt%, preferably ≥ 0.5 wt% to ≤ 5 wt%, more preferably ≥ 1 wt% to ≤ 3 wt%, based on the total weight of the color masterbatch.

According to a preferred embodiment of the invention, the colored plastic article further comprises a crosslinking agent in an amount of ≥ 0.001 wt% to ≤ 2 wt%, preferably ≥ 0.01 wt% to ≤ 1 wt%, more preferably ≥ 0.02 wt% to ≤ 0.5 wt% even more preferably ≥ 0.03 wt% to ≤ 0.15 wt%, based on the total weight of the colored plastic article.

Preferably the crosslinking agent is selected from the group comprising glycidyl acrylates copolymers, maleic acid anhydride copolymers, polymers and copolymers grafted with maleic acid anhydride, like of PE, PP or EMA grafted with maleic anhydride, glyoxal, glyoxal resins, polyamidoamin epichlohydrine, modified or non-modified melamine formaldehyde resins, Ti-lactate, boric acid, sodium aluminate, ammonium zirconium carbonate.

Crosslinking agents have reactive groups that react with the functional groups of the water-soluble polymers to from covalent or ionical bonds. Since both the crosslinking agent and the water-soluble polymer have numerous functional groups, depending on the dosage and functionality of the crosslinker, a more or less dense three-dimensional network is formed and the water-soluble polymer is converted into a water-swellable polymer.

Preferably, the crosslinking agent is a polymer that is compatible with the carrier of the color masterbatch, so that the crosslinking agent simultaneously fulfills the functionality of a compatibilizer. Useful crosslinking agents are available under the tradename Orevac or Lotader from Arkema or Yparex from The Compound Company.

The crosslinking agents are added to the color masterbatch according to the degree of cross-linking to be achieved, preferably in quantities of 0.1 to 10 wt%, more preferably of 0.5 to 5 wt% and especially preferably of 1 to 3 wt%.

The crosslinking agent can also be used in the form of a crosslinking-masterbatch comprising additional additives or without any additional additives. The dosage of a crosslinking-masterbatch depends on the loading of this crosslinking-masterbatch and is adapted according to the dosage of the pure crosslinker.

In order to avoid the formation of flocks due to the crosslinked polymers, the crosslinking agent can also be added during the production of the plastic article parallel to the color masterbatch, either in pure form as crosslinking agent or, as a rule, as a crosslinker-masterbatch. In both cases the relative dosage of the crosslinking agent in the plastic article corresponds to the dosage of the crosslinking agent added within the color masterbatch.

The crosslinking agents are present in the colored plastic article in quantities of 0.001 wt% to 2 wt%, more preferably of 0.01 wt% to 1 wt%, more preferably ≥ 0.02 wt% to ≤ 0.5 wt% even more preferably ≥ 0.03 wt% to ≤ 0.15 wt%, based on the weight of the colored plastic article.

## Dispersing agent

In order to improve mixing behavior of the lake pigment within the color masterbatch and thus also within the plastic basis material, the color masterbatch preferably comprises a dispersing agent. The dispersing agent preferably enhances the processability of the lake pigment, the color masterbatch, the mixture of the color masterbatch and the plastic basis material, and thus the color homogeneity of the colored plastic article.

To this regard and according to a preferred embodiment of the invention, the color masterbatch further comprises the dispersing agent in an amount of ≥ 0.3 wt% to ≤ 25 wt%, preferably ≥ 0.6 wt% to ≤ 14 wt%, more preferably ≥ 1.2 wt% to ≤ 3 wt%, based on the total weight of the color masterbatch, wherein the dispersing agent is selected from the group comprising ionic dispersing agents, and non-ionic dispersing agents.

Furthermore, according to a preferred embodiment of the invention, the colored plastic article further comprises the dispersing agent in an amount of ≥ 0.003 wt% to ≤ 5 wt%, preferably ≥ 0.006 wt% to ≤ 1 wt%, more preferably ≥ 0.01 wt% to ≤ 0.5 wt%, even more preferably ≥ 0.012 wt% to ≤ 0.12 wt%, based on the total weight of the colored plastic article, wherein the dispersing agent is selected from the group comprising ionic dispersing agents, and non-ionic dispersing agents.

Preferably the dispersing agent is selected from esters and hydrocarbons, aromatic and non-aromatic carboxylic acid esters, such as acetyltributylcitrate (ATBC), ethyl acrylate, penta erythritol esters such as pentaerythritol mono-, di-, tri or tetrastearate or pentaerythritol mono-oleate, montanic acid ester, aliphatic esters of C4- C7 dicarboxylic acids, preferably adipic acid dibutylester and glutaric acid dibutlyester, fatty acid esters, ethoxylated fatty acid, poly oxyethylated compounds derived from sorbitol and oleic acid, polysorbate 20, polysorbate 40, polysorbate 60, polysorbate 65, polysorbate 80, polymers that are fatty acid-based with a non-ionic group per molecule, acrylate-copolymers, acrylate/styrene copolymers, fatty acid derivatives, polyalkoxylates;

- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer having a MW of 5000 to 30000 g/mol and their copolymers. The polyacrylate polymers may be preferably selected from the Efka® 4000 series from BASF SE.

Further preferred dispersing agents are low molecular weight (< 300 g/mol) cyclic esters and amides (lactones, lactams), which are converted into water-soluble hydroxycarboxylates or aminocarboxylates such as ε-caprolactone or ε-caprolactam on saponification.

Exemplary dispersing agents are alkoxylated, preferably ethoxylated or ethoxylated and propoxylated, fatty acid alkyl esters preferably containing 1 to 4 carbon atoms in the alkyl chain, more particularly the fatty acid methyl esters. The alkoxylated alcohol dispersing agents mentioned above includes end caped alkoxylated alcohol dispersing agents.

Exemplary nonionic low alkoxylated alcohol dispersing agents that can be used are alkoxylated alcohols containing 1 to 4 ethylene oxide groups (1-4EO), 1 to 4 butylene oxide groups (1-4BO), 1 to 4 propylene oxide groups (1-4PO), end caped alkoxylated alcohol dispersing agents thereof or mixtures thereof.

Advantageously low alkoxylated alcohols are useful according to the invention, particularly primary and/or branched alcohols, preferably containing 8 to 18 carbon atoms, and containing 1 to 4 ethylene oxide groups (1-4EO), 1 to 4 butylene oxide groups (1-4BO), 1 to 4 propylene oxide groups (1-4PO), end caped alkoxylated alcohol dispersing agents.

Exemplary nonionic higher alkoxylated alcohol dispersing agents suitable for use in the color masterbatch are alkoxylated alcohols containing 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO) groups, end caped alkoxylated alcohol dispersing agents thereof, or mixtures thereof.

Advantageously higher alkoxylated alcohols useful in the coloring bath are particularly linear and/or branched alcohols, preferably containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. The alcohol radical may be linear, branched, or may contain a mixture.

Particularly preferred are higher alkoxylated alcohols, preferably alcohol ethoxylates with linear or branched radicals of alcohols with 12 to 18 carbon atoms, e.g. from coco-, palm-, tallow- or oleyl alcohol, containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. However, most preferred is isotridecyl alcohol with 6EO to 14EO, 6PO to 14PO, 6BO to 14BO, preferably 7EO to 10EO, 7PO to 10PO, 7BO to 10BO, and most preferred 8EO, 8PO, 8BO, or a mixture thereof.

According to the present invention higher alkoxylated alcohols can be used with 5EO, 6EO, 7EO, 8EO, 9EO, 10EO, 11EO, 12EO, 13EO, 14EO, 15EO, 16EO,17EO, 18EO, 19EO, 20EO, 21EO, 22EO, 23EO, 24EO or 25EO, 5PO, 6PO, 7PO, 8PO, 9PO, 10PO, 11PO, 12PO, 13PO, 14PO, 15PO, 16PO,17PO, 18PO, 19PO, 20PO, 21PO, 22PO, 23PO, 24PO or 25PO, 5BO, 6BO, 7BO, 8BO, 9BO, 10BO, 11BO, 12BO, 13BO, 14BO, 15BO, 16BO,17BO, 18BO, 19BO, 20BO,

21BO, 22BO, 23BO, 24BO or 25BO, end caped alkoxylated alcohol dispersing agents thereof, or a mixture thereof.

Exemplary higher alkoxylated alcohols with 5EO to 40EO, preferably 6EO or 30EO, further preferred 7EO to 20EO, more preferred 8EO to 10EO and most preferred 8EO; 5PO to 40PO, preferably 6PO or 30PO, further preferred 7PO to 20PO, more preferred 8PO to 10PO and most preferred 8PO; 5BO to 40BO, preferably 6BO or 30BO, further preferred 7BO to 20BO, more preferred 8BO to 10BO and most preferred 8BO include $C_{12}$-$C_{14}$-alcohols; $C_9$-$C_{11}$-alcohols, $C_{13}$-$C_{15}$- alcohols, $C_{12}$-$C_{18}$-alcohols, end caped alkoxylated alcohol dispersing agents thereof, and mixtures thereof, as well as mixtures of $C_{12}$-$C_{14}$-alcohols and $C_{12}$-$C_{18}$ -alcohols, end caped alkoxylated alcohol dispersing agents thereof, and most preferred is a $C_{13}$-alcohol.

In addition to these dispersing agents, fatty alcohols containing more than 12 EO, 12 PO, 12 BO may also be used. Examples of such fatty alcohols are tallow fatty alcohol containing 14 EO, 25 EO, 30 EO or 40 EO, 14 PO, 25 PO, 30 PO or 40 PO, 14 BO, 25 BO, 30 BO or 40 BO and end caped alkoxylated alcohol dispersing agents thereof.

The degrees of 5EO to 40EO, 5PO to 40PO, 5BO to 40BO preferably 6EO or 30EO, 6PO or 30PO, 6BO or 30BO, further preferred 7EO to 20EO, 7PO to 20PO, 7BO to 20BO, more preferred 8EO to 10 EO, 8PO to 10 PO, 8BO to 10 BO and most preferred 8EO, 8PO, 8BO alkoxylation mentioned are statistical mean values, which for a special product, may be either a whole number or a fractional number. However, more preferred, the degrees of 5EO to 40EO, 5PO to 40PO, 5BO to 40BO preferably 6EO or 30EO, 6PO or 30PO , 6BO or 30BO further preferred 7EO to 20EO, 7PO to 20PO , 7BO to 20BO, more preferred 8EO to 10 EO, 8PO to 10 PO, 8BO to 10 BO and most preferred 8EO, 8PO, 8BO alkoxylation mentioned may be either a whole number or a fractional number. Most preferred, the degrees of 5EO to 40EO, 5PO to 40PO, 5BO to 40BO, preferably 6EO or 30EO, 6PO or 30PO, 6BO or 30BO, further preferred 7EO to 20EO, 7PO to 20PO, 7BO to 20BO, more preferred 8EO to 10 EO, 8PO to 10PO, 8BO to 10BO and most preferred 8EO, 8PO, 8BO. The alkoxylation grade mentioned may be a whole number.

Preferred higher alkoxylated alcohols have a narrow homolog distribution (narrow range ethoxylates, NRE).

Further dispersing agents include alkoxylated long chain fatty acid amides where the fatty acid has 8-20 carbon atoms and the amide group is alkoxylated with 1-20 ethylene oxide, propylene oxide and/or butylene oxide units.

A further class of dispersing agents, which can be used in the color masterbatch, is that of the alkyl polyglycosides (APG). Suitable alkyl polyglycosides satisfy the general Formula RO(G)z where R is a linear or branched, particularly 2-methyl-branched, saturated or unsaturated aliphatic radical containing 8 to 22 and preferably 12 to 18 carbon atoms and G stands for a glycose unit containing 5 or 6 carbon atoms, preferably glucose. The degree of oligomerization z is a number between 1.0 and 4.0 and preferably between 1.1 and 1.4.

Silicone containing nonionic dispersing agents, such as the ABIL B8852 or Silwet 7602, can also be used. An exemplary silicone-containing dispersing agent is silicone polybutane.

Examples of amine oxide dispersing agents include: dimethyldodecylamine oxide, dimethyltetradecylamine oxide; ethylmethyltetradecylamine oxide, cetyldimethylamine oxide, dimethylstearylamine oxide, cetylethylpropylamine oxide, diethyldodecylamine oxide, diethyltetradecylamine oxide, dipropyldodecylamine oxide, lauryl dimethyl amine oxide, bis- (2-hydroxyethyl) dodecylamine oxide, bis- (2-hydroxyethyl)-3-dodecoxy-1-hydroxypropyl amine oxide, (2-hydroxypropyl) methyltetradecylamine oxide, dimethyloleyamine oxide, dimethyl- (2-hydroxydodecyl) amine oxide, and the corresponding decyl, hexadecyl and octadecyl homologs of the above compounds.

Additional nitrogen-containing dispersing agents include ethoxylated primary alkyl amines where the alkyl group has 10-20 carbon atoms and the amine is ethoxylated with 2-20 ethylene oxide units.

Additionally, non-ionic dispersing agents derived from the condensation of ethylene oxide with the product resulting from the reaction of propylene oxide and ethylene diamine are also useful in the coloring bath. For example, there are compounds containing from 40% to 80% of polyoxyethylene by weight and having a molecular weight from 5,000 to 11,000 resulting from the reaction of ethylene oxide groups with a hydrophobic base constituted of the reaction product from ethylene diamine and excess propylene oxide wherein the base has a molecular weight on order of 2,500-3,000.

Suitable nonionic dispersing agents include the polyoxyethylene-polyoxypropylene condensates, which are sold by BASF under the trade name 'Pluronic', polyoxyethylene condensates of aliphatic alcohols/ethylene oxide condensates having from 1 to 30 moles of ethylene oxide per mole of coconut alcohol; ethoxylated long chain alcohols sold by Shell Chemical Co. under the trade name 'Neodol', polyoxyethylene condensates of sorbitan fatty acids, alkanolamides, such as the monoalkoanolamides, dialkanolamides and the ethoxylated alkanolamides, for example coconut monoethanolamide, lauric isopropanolamide and lauric diethanolamide; and amine oxides for example dodecyldimethylamine oxide.

Further exemplary dispersing agents include alkylphenol alkoxylates, and amine oxides such as alkyl dimethylamine oxide or bis (2- hydroxyethyl) alkylamine oxide.

Typical ionic dispersing agents are anionic dispersing agents, including ammonium salts or alkali salts of carboxylic, sulfamic or phosphoric acids, for example, sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2 ethanediylphenyl)alpha-sulfo-omega-hydroxy ether with phenol 1-(methylphenyl)ethyl derivative ammonium salts; or amphoteric, that is, compounds bearing both anionic and cationic groups, for example, lauryl sulfobetaine; dihydroxy ethylalkyl betaine; amido betaine based on coconut acids; disodium N-lauryl amino propionate; or the sodium salts of dicarboxylic acid coconut derivatives.

Further exemplary ionic dispersing agents include fatty alcohol ether sulphates, olefin sulphonates, fatty acid derivatives, phosphoric acid esters or lignin sulphonates.

Exemplary anionic dispersing agents include organic carboxylates, organic sulfonates, organic sulfates, organic phosphates and the like, particularly linear alkylaryl sulfonates, such as alkylarylcarboxylates, alkylarylsulfonates, alkylarylphosphates, and the like. These classes of anionic dispersing agents are known within as linear alkyl benzyl sulfonates (LABS), alpha olefin sulfonates (AOS), alkyl sulfates, and secondary alkane sulfonates.

Suitable cationic dispersing agents include quaternary ammonium compounds having the formula of $RR'R''R'''N^+X^-$, where R, R', R" and R''' are each a $C_1$-$C_{24}$ alkyl, aryl or arylalkyl group that can optionally contain one or more P, O, S or N heteroatoms, and X is F, Cl, Br, I or an alkyl sulfate. Additional preferred cationic dispersing agents include ethoxylated and/or propoxylated alkyl amines, diamines, or triamines.

## Producing the colored plastic article

As already mentioned, it is an object of the present invention to provide a method for producing the colored plastic article comprising the steps:

a) Mixing the above color masterbatch with a plastic basis material in an extruder in a weight ratio of 20:80 to 1:99, preferably of 10:90 to 2:98, more preferably of 5:95 to 3:97 (color masterbatch: plastic basis material), wherein the plastic basis material comprises at least one basis polymer having a molecular weight Mw ≥ 1000 g/mol, or
b) Providing the mixture comprising the color masterbatch and the plastic basis material in an extruder, and
c) forming the colored plastic article by a polymer processing technique.

In other words, the colored plastic article is preferably provided by mixing and melting the color masterbatch with the plastic basis material. Preferably the color masterbatch is solid at 23 °C. This simplifies processing of the color masterbatch. Since the color masterbatch and the plastic basis material are mixed in an extruder and the colored plastic article is formed by a polymer processing technique, a colored plastic article that is colored throughout its entire volume is produced. However, it is possible that the plastic article consists of several individual layer and only one or some of these individual layers are colored. For example, if the color masterbatch is only added to an outer layer, only this layer is colored. The remaining layers retain the original color of the plastic basis material.

The color masterbatch and the plastic basis material are mixed in a weight ratio of 20:80 to 1:99, preferably of 10:90 to 2:98, more preferably of 5:95 to 3:97 (color masterbatch : plastic basis material), in order to ensure a satisfying color strength of the colored plastic article as well as the decolorabilitiy of the colored plastic article in the decoloring bath.

With regard to the polymer processing technique a variety of different processing techniques may be used. According to a preferred embodiment of the invention the polymer processing technique is selected from thermoplastic processing techniques, such as injection molding, compression molding, calendaring, extrusion, film extrusion processing method, blown cast processing method, calandered films processing method, thermoforming sheets processing method, foam extrusion processing method, profile extrusion processing method, injection blow molding processing method, injection stretch blow molding processing method, compression molding processing method, extruding processing method, thermoforming processing method, blowing processing method and/or 3D-printing processing method.

## Plastic basis material and basis polymer

The plastic basis material is the main component of the plastic article and its properties influence the usability of the colored plastic article. The plastic basis material comprises at least one basis polymer having a molecular weight Mw ≥ 1000 g/mol, preferably Mw ≥ 1200 g/mol, more preferably Mw ≥ 1500 g/mol. In general, the basis polymer may be any polymer or any mixture of polymers and may be selected according to the use of the plastic article.

According to a preferred embodiment of the invention the plastic basis material is selected from the group comprising thermoplastic and thermoplastic elastomer and/or the plastic basis material is not a thermosetting polymer; and/or the basis polymer is selected from the group comprising thermoplastic and thermoplastic elastomer and/or the basis polymer is not a thermosetting polymer.

In general, the plastic basis polymer may be any polymer or any mixture of polymers and may be selected according to the use of the plastic article. Preferably, the plastic basis polymer is chosen to be compatible with the carrier of the color masterbatch. The basis polymer can be selected different to the at least one carrier of the color masterbatch. Alternatively, the basis polymer can be the same polymer as the at least one carrier of the color masterbatch. Preferably the basis polymer is selected from the list comprising the carriers.

Mw of polymer

As already mentioned, the carrier is an organic polymer having a molecular weight Mw ≥ 1000 g/mol, preferably Mw ≥ 1200 g/mol, more preferably Mw ≥ 1500 g/mol. Also, the water-soluble or water-swellable component can be a water-soluble polymer and/or a water-swellable polymer having a molecular weight Mw ≥ 1000 g/mol, preferably Mw ≥ 1200 g/mol, more preferably Mw ≥ 1500 g/mol. Furthermore, the basis polymer has molecular weight Mw ≥ 1000 g/mol, preferably Mw ≥ 1200 g/mol, more preferably Mw ≥ 1500 g/mol.

For polymers the individual polymer chains rarely have exactly the same degree of polymerization and molar mass, and there is a distribution around an average value (molecular weight distribution (MWD)). To this regard, the molecular weight of the polymer is given with respect to the Mass average molar mass or Mw (also commonly referred to as weight average or Weight Average Molecular Weight (WAMW)).

The mass average molecular mass can be determined by gel permeation chromatography, static light scattering, small angle neutron scattering, X-ray scattering, and/or sedimentation velocity. Furthermore, in case the distribution is known, the mass average molecular mass can be calculated by

$$\bar{M}_w = \frac{\sum_i N_i M_i^2}{\sum_i N_i M_i}$$

where Ni is the number of molecules of molecular mass $M_i$.

**Plastic article and color stability of plastic article**

Not only different polymer processing technique can be used in order to provide the colored plastic article, but also different types of colored plastic articles may be produced.

According to preferred embodiments of the invention, the colored plastic article is selected from the group comprising a sheet, a foil, a container, a part, a tube, a profile, a nonwoven fabric, and preferably the article is selected from the group comprising rigid packaging such as bottles, jars, caps and closures, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

As already mentioned, due to the use of lake pigments as coloring agent the colored plastic article has an enhanced color stability. Lake pigments are stable in a broad pH range and generally have higher light and heat resistance than the dyes from which they are derived.

In this regard and according to a preferred embodiment of the invention, the plastic article is color stable under any or any combination of the following conditions:

exposure to water for 12h at 65°C;
exposure to a 2% alkaline solution of NaOH for 2 h at 60 °C;
exposure to a 3% acid solution of acetic acid for 2 h at 60 °C;
fastness to washing according to DIN EN ISO 105-C06 C2S;
fastness to perspiration according to DIN EN ISO 105-E04;
exposure to a solution of 20% ethanol and 3% acetic acid in water for 24 h at 50 °C.

To this regard and according to another preferred embodiment the colored plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

In the context of this invention being color stable preferably means, that the remaining color strength after being exposed to one of the above conditions and/or norms is ≥ 75%, preferable ≥ 85%, more preferably ≥ 95%. The remaining color strength is the color strength K/S of the plastic article before migration test minus the loss of color strength K/S during the migration test in % with color strength K/S according to Kubelca-Munk. Color strength according to Kubelca-Munk can be determined by the spectrophotometer Konica-Minolta 3600A at maximum absorbance. In addition, or alternatively to detecting the color change of the plastic article, the color stability of the plastic article can be determined by detecting the color change of the extraction medium of the extraction test and/or the color change of a polar decoloring

agent as dye absorbing agent that is added to the extraction medium prior to the test. In this regard the color change of the extraction medium and/or the polar decoloring agent is determined by visual inspection based on DIN ISO 105 A03 and A02. Preferably with regard to this assessment, the plastic article is considered color stable when 2 or less points are assigned in the visual inspection (see table 8). The polar decoloring agent as dye absorbing agent preferably is a poly amide (PA6, melting point 220°C, viscosity number (acc. to ISO307; 96% sulfuric acid) 187 -203 g/cm$^3$; spherical granulate with diameter 2.0 - 2.5mm).

**Decoloring the plastic article**

As already mentioned, it is also an object of the invention to provide a method for decoloring the colored plastic article, comprising the steps of

a) shredding the colored plastic article to a granulate and/or a powder,
b) exposing the granulate and/or powder to a decoloring bath for about ≥ 1 minute to about ≤ 240 minutes, preferably about ≥ 5 minute to about ≤ 180 minutes, more preferably about ≥ 10 minute to about ≤ 60 minutes, wherein the decoloring bath has a temperature above a glass transition temperature $T_g$ of the colored plastic article and below a melting temperature $T_m$ of the colored plastic article and/or has a temperature ≥ 80 °C to ≤ 130 °C,

wherein the decoloring bath comprises

water,
at least one polar solvent, and

- an oxidizing agent or a reducing agent and/or a polar decoloring agent,

wherein the decoloring bath has a pH about ≥ 10 or about ≤ 4, preferably about ≥ 11 or about ≤ 3, more preferably about ≥ 12 or about ≤ 2, and wherein the pH of the decoloring bath is adjusted by adding a base, preferably NaOH and/or an acid, preferably HCl.

The glass transition temperature $T_g$ of the plastic basis material may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature $T_g$ of the plastic basis material may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

The melting temperature $T_m$ of the plastic basis material may be determined according to the same standards and procedures as used for determining the glass transition temperature $T_g$ of the plastic basis material.

In other words, the colored plastic article is decolorizabel under the above decoloring conditions. Being decolorizable preferably means that the process allows to reuse at least 85 % of the plastic basis material after decolorization.

The recycling process is based on two characteristics of the colored plastic article. Due to the water-soluble or water-swellable component in the plastic article, the article swells and/or disintegrates in the decoloring bath. This gives the decoloring bath access to the lake pigment. Due to the acidic or basic conditions of the decoloring bath, the lake pigment which is chemically a salt of a metal and a water-soluble dye is transformed back into its soluble components. Depending on the composition of the decoloring bath, the decoloring is further facilitated by the oxidizing agent or by the reducing agent, which attacks the dye. Alternatively to the oxidizing or reducing agent, or in addition to the oxidizing or reducing agent, the polar decoloring agent for adsorption and/or absorption of the dye can be use. Since the dye is a low molecular weight dye, the dye that is soluble in the decoloring bath can migrate into polar decoloring agent and thus facilitate decoloration of the plastic article.

For recycling of the plastic article, the colored plastic article is shredded into granulate and/or a powder which subsequently is exposed to the decoloring bath.

According to a preferred embodiment of the invention the colored plastic article is shredded to a granulate and/or powder having a mean particle size of 0.1 mm to 20 mm, preferably 0.1 mm to 2 mm, more preferably 0.2 mm to 1 mm. A low particle size enables for a fast decoloring in the decoloring bath.

According to another preferred embodiment of the invention the weight ratio of the granulate and/or powder to

the decoloring bath is 1:2 to 1:50, preferably 1:10 to 1:40, more preferably 1:20 to 1:30 (granulate and/or powder : decoloring bath). This enables a fast decoloration without excess waste.

Oxidizing and reducing agents for the destruction of the dye

According to an embodiment, the dye of the lake pigment that dissolves in in the decoloring bath can be destroyed by a chemical oxidation or reduction reaction. This shifts the equilibrium in the decolorization process and enhances decoloration.

Preferred oxidizing agents are selected from the group comprising peroxide, peroxyacetic acid, hydrogen peroxide, peroxodisulfate, ozone, sodium percarbonate, sodium perborate, *m*-Nitrobenzolsulfonat, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromat $BrO_3^-$, halogens, such as fluorine, chlorine, bromine and iodine, hypochlorite, sodium hypochlorite, and/or potassium hypochlorite; hypochlorous acid. The oxidizing agents may be used together with bleach activators such as Tetraacetylethylenediamine.

Preferred reduction agents are selected from the groups comprising

- hydrogen in combination with precious metal catalyst, preferably $H_2$/Ni, $H_2$/Pd, $H_2$/Pt, hydrides;
- complex hydrides, preferably sodium hydride NaH, lithium aluminum hydride LiAlH4, borohydride salts $NaBH_4$;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfonic acid, zinc hydroxymethanesulfinate, sodium hydroxymethanesulfinate also known as rongalite, thiourea dioxide also known as thiox, sulfonic acid and its derivatives, sodium carbonate, sodium bicarbonate, sodium oxide, calcium oxide;
- sulfinic acid and sulfinic acid derivates, preferably aminoimino methansulfinic acid;
- glucose mixtures with dispersants; and
- formamidine sulphinic acid and zinc hydroxymethanesulfinate.

Polar decoloring agent

The plastic article can be decolored by using the polar decoloring agent in the decoloring bath. The polar decoloring agent adsorbs and/or absorbs the dye of the lake pigment that is present in the decoloring bath.

With respect to the polar decoloring agent, it may be advantageous to select the polar decoloring agent from the group comprising:

- at least one polar-polymer having a Mw of about ≥ 1000 g/mol, and/or
- at least one polar compound having a Mw of about < 1000 g/mol,

wherein the polar decoloring agent before used in the decolorization process is preferably free of a dye.

In the context of this invention the polar-polymer is an organic polymer that comprise at least ≥ 5 wt.-% of heteroatoms, wherein the weight % is calculated based on the weights of the polar-polymer. In this context a heteroatom may be any atom excluding C-atoms and H-atoms. Preferably, the heteroatom may be selected from the group comprising: N, O, F, Cl, Br, I, S, and P. Furthermore, preferably the polar-polymer having a Mw ≥ 1000 g/mol, may each comprise at least ≥ 5 wt.-% and preferably < 70 wt.-% of O-atoms.

In the context of this invention the polar compound is an organic compound that comprise at least ≥ 5 wt.-% of heteroatoms, wherein the weight % is calculated based on the weights of the organic compound. In this context a heteroatom may be any atom excluding C-atoms and H-atoms. Preferably, the heteroatom may be selected from the group comprising: N, O, F, Cl, Br, I, S, and P. Furthermore, preferably the polar compound having a Mw < 1000 g/mol, may each comprise at least ≥ 5 wt.-% and preferably < 70 wt.-% of O-atoms.

The molecular weight of the polar decoloring agent for the adsorption and/or absorption of the dye from the decoloring bath may be lower than the molecular weight of the basis polymer of the plastic basis material. Furthermore, preferably the polar decoloring agent is more polar than the basis polymer of the plastic basis material. This means in the context of this invention, that the percentage by weight of heteroatoms is higher in the polar decoloring agent than in the basis polymer of the plastic basis material.

In case the polar decoloring agent is solid, the particle size of the polar decoloring agent is preferably different than the particle size of the granulate and/or powder generated from the colored plastic article. Preferably the particles size of the granulate and/or powder of the colored plastic article differs from the particle size of the solid polar decoloring

agent such that a separation of the granulate generated from the colored plastic article from the solid decoloring agent is possible using a sieve.

The adsorption and/or absorption of the dye to the polar decoloring agent may be enforced by increasing the amount of electrostatic interaction between dye and the polar decoloring agent. According to a preferred embodiment the polar decoloring agent may comprise polar, acidic, and/or basic groups, wherein polar groups for electrostatic interaction are preferred. More preferred the polar decoloring agent may comprise polar groups selected from the group comprising sulfonyl group, such as tosyl-, brosyl-, nosyl-, mesyl-, trifyl-, tresyl-, and dansyl-, hydroxyl group, amine groups including primary-, secondary-, and tertiary amines, carboxylic groups, imine and enamine groups, ketone groups, carbonyl groups, aldehyde groups, organic amide groups such as sulfone amides and phosphor amides, organic halide groups, and/or carbamate groups.

Preferably the polar decoloring agent is solid at the temperature of the decolorizing process. According to a preferred embodiment the polar decoloring agent may have the form of flakes, particles, granulates. Preferably the particles, granulates, flakes of the polar decoloring agent may have a mean particle size diameter of 0.01 mm to 100 mm, further preferred 1 mm to 8 mm and also preferred 2 mm to 5 mm. Further preferred the polar decoloring agents are nano-particles, preferably with a mean particle size of about ≥ 1 nm to about ≤ 100 nm. With regard to the form the particles, granulates, flakes of the polar decoloring agent may preferably not have a round shape (worst ratio surface to volume). However, in case nano-particles are used, round shapes may be possible. The design of the polar decoloring agent may have cylindrical form or any other design. Furthermore, it is preferred that the particles, granulates, flakes and/or nano-particles are arranged on or in a surface of a solid substrate. It seems to be important that the shape should be selected such that the ratio surface:volume may be as large as possible.

Having a solid polar decoloring agent in the form of flakes, particles and/or granulates has the advantage that it is possible to filter off the polar decoloring agent. Furthermore, the size of the solid polar decoloring agent is different from the size of the granulates of the colored plastic article to be decolored, such that a separation of the polar decoloring agent from the granulates of the colored plastic article by sieve is possible

However, separation of the polar decoloring agent may also be possible by arranging the polar decoloring agent on or in the surface of a solid substrate. In order to exploit a high surface to volume ratio, it may be preferred to have the polar decoloring agent as nano-particles arranged on the surface of a solid substrate.

In the context of separating the polar decoloring agent from the liquid components of the decoloring bath i.e. from the water, polar solvent and optionally the nonpolar solvent, and for separating the polar decoloring agent from the granulates and/or powder of the colored plastic article and according to a preferred embodiment the polar decoloring agent may get a density below the density of the liquid components of the decoloring bath, due to the absorption and/or adsorption of the dye, having a molecular weight Mw in the range of about ≥ 250 g/mol to about ≤ 800 g/mol. Thus, the colored polar decoloring agent may be separated from the liquid components of the decoloring bath. It may be possible that the density of the polar decoloring agent changes by absorbing and/or adsorbing of the dye. The density of the polar decoloring agent may increase above the density of at least one of the liquid components of the decoloring bath. Therefore, due to absorption and/or adsorption of the dye the polar decoloring agent may sink onto the bottom of a reaction vessel and may be easily separated from the liquid components of the decoloring bath, while the granulates generated from the colored plastic article stay in the decoloring bath.

As already mentioned, the polar decoloring agent is preferably select from the group comprising:

- at least one polar-polymer having a Mw of about ≥ 1000 g/mol, and/or
- at least one polar compound having a Mw of about < 1000 g/mol.

<u>Polar-polymer or mixture</u>

The polar-polymer or mixture thereof may be selected from the group comprising:

- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;

- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl(meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably $\alpha$-methylstyrene and $\alpha$-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferabl, hydroxyl-functional dendritic polyesters, polycaprolactone, polyethylenterephthalate (PET), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diolterephthalate, polypentaspiroglycol-terephthalate (PSG), polycyclohexylenedimethylene-terephthalate (PCT), polyester based copolymer including a dicarboxylic acid-derived residue including a residue derived from an aromatic dicarboxylic acid and a diol-derived residue including a residue derived from 4-(hydroxymethyl)cyclohexylmethyl-4' -(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);

- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such $NH_2$-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other synthetic and/or non-synthetic polar-polymer of amorphous copolyester that can be used are known under the tradename Akestra 90. The above named synthetic and/or non-synthetic polar-polymers may be used alone or in an admixture of two or more.

With regard to hydroxyl-functional dendritic polyesters that can be suitable used as a polar-polymers, these molecules may be produced using polyalcohol cores, hydroxy acids and technology based on captive materials. The dendritic structures may be formed by polymerization of the particular core and 2,2-dimethylol propionic acid (Bis-MPA). The base products that may be obtained are hydroxyl-functional dendritic polyesters. They may be fully aliphatic and may consist only of tertiary ester bonds. They may provide excellent thermal and chemical resistance. Extensive branching also improves reactivity, lowers viscosity and results in balanced mechanical properties. The hydroxyl-functional dendritic polyesters may be known under the trade name Boltorn®. The following dendritic polymers may be used as non-limiting examples: Boltorn® H20 16 terminal hydroxyl groups, nominal molecular weight of 1750 g/mol, Boltorn® H2004 6 terminal hydroxyl groups, nominal molecular weight of 3100 g/mol, Boltorn® H311 23 terminal hydroxyl groups, nominal molecular weight of 5300 g/mol, Boltorn® P500 Formulated bimodal product with terminal hydroxyl groups, nominal molecular weight 1800 g/mol, Boltorn® P1000 formulated bimodal product with terminal hydroxyl groups, nominal molecular weight 1500 g/mol, Boltorn® U3000 modified with unsaturated fatty acid, nominal molecular weight 6500 g/mol, Boltorn® W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

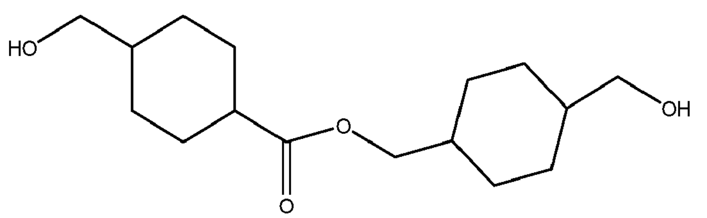

Chemical Formula 1

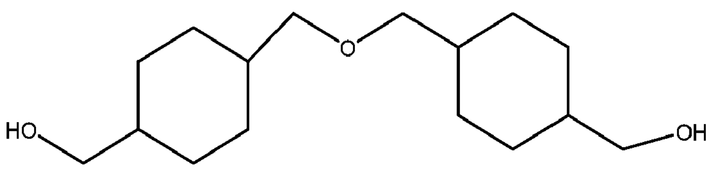

Chemical Formula 2

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The polar-polymer may also comprise the polyester based copolymers used in a mixture with polyethylene terephthalate (PET). The mixture may consist of 1 to 99 wt.% of PET and 1 to 99 wt.% of the polyester based copolymers, in order that both components add up to 100 wt.%. Additionally or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

Polar compound and mixtures thereof

With respect to the polar compound and according to another embodiment the polar compound or mixture thereof may be selected from the group comprising:

- oligoacrylate with methyl (oligomethylacrylate), ethyl (oligoethylacrylate), propyl (oligopropylacrylate), or butyl (oligobutylacrylate),
- oligomethacrylate with methyl (oligomethylmathacrylate), ethyl (oligoethylmethacrylate), propyl (oligopropylmethacrylate), or butyl (oligobutylmethacrylate),
- cooligomers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates oligomers, preferably benzyl(meth)acrylate oligomers or phenyl(meth)acrylate oligomers, the

aryl radicals each being unsubstituted or up to four times substituted;

- cycloalkyl(meth)acrylates oligomers, preferably 3-vinylcyclohexyl(meth)acrylate oligomers, bornyl (meth)acrylate oligomers;
- hydroxylalkyl (meth)acrylates oligomers, preferably 3- hydroxypropyl (meth)acrylate oligomers, 3,4- dihydroxybutyl(meth)acrylate oligomers, 2-hydroxyethyl(meth)acrylate oligomers, 2-hydroxypropyl(meth)acrylate oligomers;
- glycol di(meth)acrylates oligomers, preferably 1,4-butanediol (meth)acrylate oligomers;
- (meth)acrylates of ether alcohols oligomers, preferably tetrahydrofurfuryl (meth)acrylate oligomers, vinyloxyethoxyethyl(meth)acrylate oligomers;
- oligomers of amides and nitriles of the (meth)acrylic acid, preferably N-(3-dimethylaminopropyl)(meth)acrylamide oligomers, N-(diethylphosphono)(meth)acrylamide oligomers, 1-methacryloylamido-2-methyl-2-propanol oligomers;
- oligomers of sulfur-containing methacrylates, preferably ethylsulfinylethyl(meth)acrylate, 4-thiocyanatobutyl(meth)acrylate oligomers, ethylsulfonylethyl(meth)acrylate oligomers, thiocyanatomethyl(meth)acrylate oligomers, methylsulfinylmethyl(meth)acrylate oligomers, bis((meth)acryloyloxyethyl)sulfide oligomers;
- oligohydric (meth)acrylates, preferably trimethyloylpropanetri(meth)acrylate oligomers;
- acrylonitrile oligomers;
- vinyl ester oligomers, preferably vinyl acetate oligomers;
- styrene oligomers, substituted styrenes oligomers with an alkyl substituent in the side chain, preferably $\alpha$-methylstyrene and $\alpha$ -ethylstyrene, substituted styrenes oligomers with an alkyl substituent on the ring, preferably vinyl toluene, and p-methylstyrene, halogenated styrene oligomers, preferably monochlorostyrene oligomers, dichlorostyrene oligomers, tribromostyrene oligomers and tetrabromostyrene oligomers;
- heterocyclic vinyl oligomers, preferably 2-vinylpyridine oligomers, 3-vinylpyridine oligomers, 2-methyl-5-vinylpyridine oligomers, 3-ethyl-4-vinylpyridine oligomers, 2,3-dimethyl-5-vinylpyridine oligomers, vinylpyrimidine oligomers, vinylpiperidine oligomers, 9-vinylcarbazole oligomers, 3-vinylcarbazole oligomers, 4-vinylcarbazole oligomers, 1-vinylimidazole oligomers, 2-methyl-1-vinylimidazole oligomers, N-vinylpyrrolidone oligomers, 2-vinylpyrrolidone oligomers, N-vinylpyrrolidine oligomers, 3-vinylpyrrolidine oligomers, N-vinylcaprolactam oligomers, N-vinylbutyrolactam oligomers, vinyl oxolane oligomers, vinyl furan oligomers, vinyl thiophene oligomers, vinylthiolane oligomers, vinylthiazoles and hydrogenated vinylthiazoles oligomers, vinyloxazoles and hydrogenated vinyloxazoles;
- oligomers of vinyl and isoprenyl ethers;
- maleic acid oligomers, preferably maleic anhydride oligomers, methyl maleic anhydride oligomers, maleimide oligomers, methyl maleimide; and
- cooligomers of ethylene and propylene with acrylic esters, preferably oligoethylen-block-co-oligomethylmethacrylat, oligopropylen-block-co-oligomethylmethacrylat;
- aliphatic and/or aromatic oligoesters, preferably oligocaprolactone, oligoethylenterephthalate (PET), oligotrimethylenterephthalat (PTT), oligobutylenterephthalat (PBT), glycolized oligoglycolterephthaltat (G-PET), amorphes oligoethylenterephthalat (A-PET), oligoesters of terephthalic acid, oligospiro-diol-terephthalate, oligopentaspiroglycolterephthalate (PSG), polycyclohexylenedimethylene-terephthalate, oligoester based cooligomer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, oligester based cooligomer including a dicarboxylic acid-derived residue including a residue derived from an aromatic dicarboxylic acid and a diol-derived residue including a residue derived from 4,4-(oxybis(methylene)bis) cyclohexane methanol;
- oligocarbonate (PC), 2,2-Bis-(4-hydroxyphenyl)-propan (Bisphenol A) oligocarbonate, 2,2-Bis-(4-hydroxyphenyl)-butan (Bisphenol B) oligocarbonate, 1,1-Bis(4-hydroxyphenyl)cyclohexan (Bisphenol C) oligocarbonate, 2,2'-Methylendiphenol (Bisphenol F) oligocarbonate, 2,2-Bis(3,5-dibrom-4-hydroxyphenyl)propan (Tetrabrombisphenol A) oligocarbonate und 2,2-Bis(3,5-dimethyl-4-hydroxyphenyl)propan (Tetramethylbisphenol A) oligocarbonate, bisphenol S oligocarbonate, dihydroxydiphenylsulfid oligocarbonate, tetramethylbisphenol A oligocarbonate, 1,1-Bis(4-hydroxyphenyl)-3,3,5-trimethylcyclohexane (BPTMC) oligocarbonate, 1,1,1-Tris(4-hydroxyphenyl)-ethane (THPE) oligocarbonate;
- aliphatic oligoamide (PA), preferably PA 6 based on oligocaprolactam, PA 6.6 based on 6,6-hexamethylendiamin and adipic acid, PA 6.66 based on caprolactam, co-poymer of hexamethylendiamin and adipic acid, PA 66.610 based on hexamethylenediamine, cooligomer of adipic acid and sebaic acid, PA 4.6, PA10, PA 12 and PA cooligomers;
- oligourethane (PU),
- polar-cooligomere, maleic anhydride-olefin cooligomer;
- oligoalkylenoxide, oligoalkylene block cooligomer, propylenoxide-ethylenoxide cooligomer, (m)ethylene acrylate-maleic anhydride cooligomer;
- polar-teroligomere, preferably reactive teroligomers of ethylene, acrylic ester and maleic anhydride, or ethylene,

methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), oligoamide, oligoester-oligoamides, or butyl (butyl(meth)acrylate), oligoether-oligoamide cooligomers;

- polar oligomer blends, preferably oligocarbonate/oligoethylenterephthalat blends (PC/PET blends), oligocarbonate/oligobutyleneterephthalate blends (PC/PBT blends), blends of oligocyclohexylene dimethylene terephthalate cooligomer, blends of oligo(butylene-adipate-terephthalate);
- oligoacrylnitril and oligoacrylnitril-cooligomers, preferably oligo acrylonitrile butadiene styrene (ABS), oligo styrene-acrylonitrile;
- oligostyrene and oligostyrene cooligomers, preferably styrene/butadiene co-oligomer (SBR), oligo styrene-isoprene-styrene (SIS), oligo(glycidyl methacrylate) grafted sulfonamide based oligostyrene resin with tertiary amine;
- ethylene-vinyl acetate;
- oligoether, preferably oligoethyleneglycol, oligoethyleneglycol with at least one fatty acid coupled to the oligoethyleneglycol, oligoether with terminating functional groups, preferbyl $NH_2$-terminated oligoethers,
- functionalized oligoacrylamide oligomers, cooligomers and teroligomers, preferably oligo(2-acrylamido-2-aminopropionicacid) (oligoAMPA), oligo(2-acrylamido-2-amino propane sulfonic acid), oligo(N-isopropylacylamide (oligoPNIPAM); oligo (amidoamine-co-acrylic acid) co-oligomer, oligo(N,N-dimethylacrylamide-co-sodium acrylate), oligo(acrylamide-co-sodium acrylate)/oligo(ethylene glycol) semi-IPN, oligo(acrylamide-co-sodium 4-styrenesulfonate), oligo(acrylamide-co-sodium 4-styrenesulfonate)/oligo(ethylene glycol) semi-IPN, oligo(acrylamide-co-sodium methacrylate), oligo(acrylamide-co-sodium methacrylate)/oligo(ethylene glycol) semi-IPN, and/or oligo(N-isopropylacrylamide-co-acrylic acid) andoligo(acrylamide-co-acrylic acid;
- oligo(ether sulfones)/oligo(ethyleneimine) (PES/PEI);
- oligovinylpyrrolidone, preferably oligo(N-vinyl-2-pyrrolidone), oligo(N-vinyl-2-pyrrolidone-co-acrylonitrile) treated with hydroxylamine-hydrochloride
- oligovinyl alcohol;
- oligo(1-naphthylamine)-camphorsulphonic acid; and mixtures thereof.

With regard to the oligester based cooligomers that can be suitable used as a polar compound, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

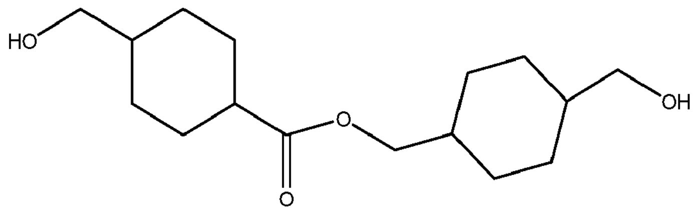

Chemical Formula 1

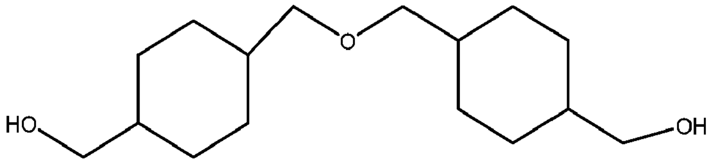

Chemical Formula 2

The compounds of chemical formula 1 and 2 can be cooligomerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the cooligomers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The polar compound may also comprise the oligoester based cooligomers used in a mixture with oligoethylene terephthalate (PET). The mixture may consist of 1 to 99 wt.% of PET and 1 to 99 wt.% of the oligoester based cooligomers, in order that both components add up to 100 wt.%. Additionally or alternatively, the compounds according to chemical formulas 1 and 2 may be used as co-monomers together with a further diol-component, e.g. ethylene glycol, in the preparation of the oligoester based cooligomers.

The oligoester based cooligomer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a oligocondensation reaction. In this case, other diols such as 1,4-cyclohexane dimethanol, ethylene glycol, diethylene glycol, or the like, as described above may be further reacted, such that a oligoester based cooligomer further including other diol-derived residues may be prepared.

With regard to the oligoether these may comprise but not limited to compounds that contains at least one oligoethyleneglycol moiety and at least one fatty acid moiety coupled to the oligoethyleneglycol moiety. The oligoethyleneglycol moiety may contain 8 or 9 ethyleneglycol repeating units.

The fatty acid moieties may be saturated or unsaturated and may contain 10 to 30 carbon atoms, preferably 16 to 22 carbon atoms.

Examples of these fatty acid moieties are oleate, laureate, stearate, palmitate and ricinoleate. Examples of compound that contain at least one polyethyleneglycol moiety and at least one fatty acid moiety coupled to the polyethyleneglycol moiety include PEG 300 di-oleate, PEG 300-distearate, PEG 400 dioleate, PEG 400 distearate, PEG 400 monooleate, PEG 400 monoricinoleate, PEG 400 monostearate.

A specific preferred example of the polar compound may be ethoxylated sorbitan oligoester. The ethoxylated sorbitan oligoester comprises a sorbitan group which is substituted by four oligoethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four oligoethylene glycol substituents and wherein the ester comprises between 18 and 22 ethylene glycol repeating units and wherein three of the ethylene glycol substituents are connected to oleate, laurate or stearate groups.

Furthermore, the polar compound may be selected from the group comprising aliphatic acids $CH_3$-$[CH_2]_n$-COOH acids (n about ≥ 3), amino acids, carboxylic acid amide, hydroxyl acids, fatty acids, aliphatic or aliphatic/aromatic aldehydes and ketones, esters, pentaerythritol, pentaerythritol ester preferably carboxylic acid ester, benzoic acid esters comprising benzylbenzoate or phenylbenzoate, phenylether, alcohols and polyvalent alcohols, preferably glycerine, amines. Preferably the polar compound is containing a heteroatom selected from N, O, S and/or halogen. Preferably, halogens may be selected from the group comprising Cl, Br and I.

The carboxylic acid amide may comprise a compound according to formula $C_2H_4(NHC(O)R^3)_2$, wherein $R^3$ is a fatty acid moiety comprising 10-17 carbon atoms. The fatty acid moieties may be saturated or unsaturated.

Pentaerythritol may comprise a compound according to formula $C(CH_2OR)_4$, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore, the polar compound may be an ether. Ether these may comprise but not limited to compounds that contains at least one ethylene glycol moiety and at least one fatty acid moiety coupled to the ethylene glycol moiety.

Examples of compounds that contains at least one ethylene glycol moiety and at least one fatty acid moiety coupled to the polyethylene glycol moiety include PEG 300-monostearate, PEG 400 monolaurate.

The carboxylic acid ester may comprise a compound according to the following chemical formula 3:

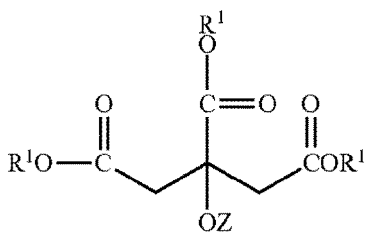

Chemical Formula 3

wherein $R^1$ is an alkyl group comprising 1-20 carbon atoms and Z is hydrogen or a group according to the formula $C(O)R^2$, wherein $R^2$ is an alkyl group comprising 1-20 carbon atoms. $R^1$ may be the same or different and is an alkyl group comprising 1-20 carbon atoms, preferably 1-15 carbon atoms, more preferably 1-10 carbon atoms. $R^2$ is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; $R^1 = C_4H_9$, $Z = CH_3CO$), propanoyltributylcitrate, acetyltrihexylcitrate and butanoyltriethylcitrate.

Furthermore, as polar compound 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

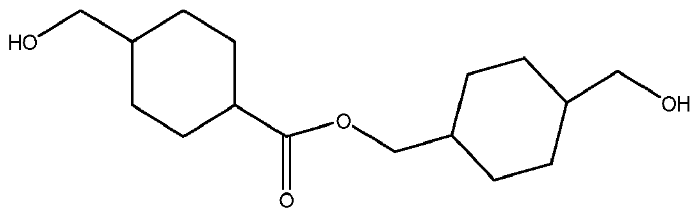

Chemical Formula 1

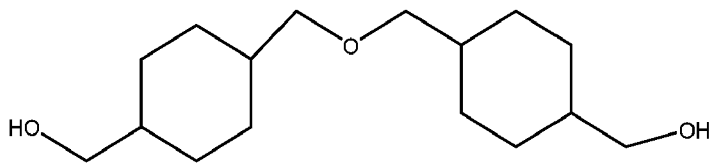

Chemical Formula 2

Polar solvent

The polar solvent may enhance the decolorization process. According to a preferred embodiment the polar solvent may be liquid at about 23 °C. Preferably the polar solvent comprises at least one polar solvent or a mixture of polar solvents, wherein the polar solvent is a solvent or solvent mixture having a dipole, and is preferably selected from the group comprising polar organic solvent; further preferred the polar solvent forms a homogenous mixture with water and further preferred the polar solvent is a mixture of liquids forming a homogeneous mixture when added together and when added to water. In the decoloring process the dye enriches in the water phase and can be separated therefrom by known techniques. Using a polar solvent that is liquid at about 23 °C in the decolorization process may facilitate decolorization since liquid solvents may be easy to handle.

The polar solvent preferably has a dipole moment, more preferably an electric dipole moment. The dipole moments may be due to a non-uniform distribution of positive and negative charges on the various atoms. The polar solvent may have a permanent dipole, an instantaneous dipole and/or an induced dipole. More preferably it may have a permanent dipole.

It may be advantageous to use a mixture of polar solvents. It may be also possible to use different polar solvents including organic polar solvents that may not form a homogenous mixture. The mixture of solvents can be a homogenous mixture, an emulsion or showing phase separation.

According to the above and according to a preferred embodiment the polar organic solvent or polar organic solvent mixture may be selected from the group comprising $C_1$ to $C_6$ - alcohol, preferably ethanol and isopropanol, glycols such as diethylene glycol and its oligomers and ethers, $C_3$ to $C_6$ - ketone, preferably acetone, $C_2$ to $C_6$ - aldehyde, $C_1$ to $C_6$ - carboxylic acid and their derivatives such as acid chlorides or acid amides, other polar solvents liquid at 23 °C, preferably dimethylsulfoxide (DMSO), dimethylformamide (DMF), benzylic alcohols such as benzyl alcohol, linear or cyclic aliphatic ethers, preferably diethyl ether, diisopropyl ether, dibutyl ether or tetrahydrofuran, aliphatic esters such as methyl acetate, ethyl acetate, butyl acetate, halogenated solvents such as dichloromethane or trichloromethane or benzyl chloride.

Nonpolar solvent

According to a preferred embodiment of the invention the decoloring bath further comprises a nonpolar solvent. The nonpolar solvent may enhance the decolorization process, especially for non-polar plastic articles.

According to a preferred embodiment the nonpolar solvent may be liquid at about 23 °C. Preferably the nonpolar solvent comprises at least one nonpolar solvent or a mixture of nonpolar solvents, wherein the nonpolar solvent is a solvent or solvent mixture not having a dipole, and is preferably selected from the group comprising nonpolar organic

solvents. The mixture of solvents can be a homogenous mixture, an emulsion or showing phase separation. The nonpolar solvent may not form a homogenous mixture with water.

According to the above and according to a preferred embodiment the nonpolar organic solvent or nonpolar organic solvent mixture may be selected from the group comprising straight, branched, saturated, unsaturated, and/or cyclic aliphatic C5 to C12 hydrocarbons, and aromatic C6 to C12 hydrocarbons. A preferred nonpolar solvent is a C9-aromatic hydrocarbon.

Levelling agent

With respect to result of the decoloration process it may be advantageous when the decoloring bath further comprises the levelling agent. According to another embodiment the decoloring bath comprises a levelling agent, wherein the levelling agent is preferably selected from the group comprising aromatic esters such as benzoic acid esters such as benzyl benzoate, alkyl benzoates such as methyl or ethyl benzoates, phthalic acid esters, naphthalic acid ester, polyphenylether, phenoles, aromatic alcohols, aromatic ketones, aryl halides, such as halogenized benzene, halogenzide toluene; N-alkylphthalimide, methylnaphthaline, diphenyle, diphenylether, naphtholether, and oxybiphenyle. Levelling agents may also be of natural origin such as coumarin or vanillin.

Preferably the levelling agent does not form a homogenous solution with water. The levelling agent may decrease the time that is used for decoloring the granulate and/or powder.

pH

To enable the decolorization process the pH of the decoloring bath is either acidic or alkaline. Preferably the decoloring bath has a pH about ≥ 10 or about ≤ 4, preferably about ≥ 11 or about ≤ 3, more preferably about ≥ 12 or about ≤ 2, and wherein the pH of the decoloring bath is adjusted by adding a base, preferably NaOH and/or an acid, preferably HCl.

The use of organic acids such as formic acid or organic bases such as ammonia in order to adjust the pH is also possible.

When the polar decoloring agent is used, either in addition to the oxidizing or reducing agent or alternative to the oxidizing or reducing agent, the decoloring bath preferably has an acidic pH. To this regard and according to a preferred embodiment of the invention the decoloring bath comprises the polar decoloring agent and has a pH about ≤ 4, preferably about ≤ 3, more preferably about ≤ 2, and wherein the pH of the decoloring solution is adjusted by adding an acid.

Temperature

It may be preferred that the decoloring bath has a temperature adjusted according to specific properties of the colored plastic article and/or the plastic basis material. Preferably, the decoloring bath has a temperature selected ≥ a glass-transition temperature $T_g$ and below a melting temperature $T_m$ of the plastic basis material. This may have the advantages that the decoloring of the granulate and/or powder is speeded up. Furthermore, in case a solid polar decoloring agent is used, the temperature of the decoloring bath may be selected ≥ the glass-transition temperature $T_g$ and below the melting temperature $T_m$ of the solid decoloring agent. Preferable the decoloring bath has a temperature ≥ 80 °C to ≤ 130 °C.

The glass transition temperature $T_g$ may be the gradual and reversible transition in amorphous regions of the plastic basis material and/or the solid polar decoloring agent from a hard and relatively brittle state into a viscous or rubbery state as the temperature is increased. The glass transition temperature $T_g$ of the plastic basis material, the uncolored plastic article and/or the solid polar decoloring agent may be determined by differential scanning calorimetry (DSC), which is a thermoanalytical technique in which the difference in the amount of heat required to increase the temperature of a sample and reference is measured as a function of temperature.

The glass transition temperature $T_g$ of the plastic basis material, the colored plastic article and/or the solid polar decoloring agent may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO /DIS 11357-3 (Plastics - Differential Scanning Calorimetry Part 3: Determination of the melting and crystallization temperature and the melting and crystallization enthalpy. (2009)), ISO 11357-4 (Plastics - Differential Scanning Thermal Analysis (DSC) Part 4: Determination of specific heat capacity. (2005)).

The glass transition temperature $T_g$ of the plastic basis material, the colored plastic article and/or the solid polar decoloring agent may be determined using a Mettler Toledo DSC 3+ differential calorimeter, a sample amount of 10 +/-

1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

The melting temperature $T_m$ of the plastic basis material, the colored plastic article and/or the solid polar decoloring agent may be determined according to the same standards and procedures as used for determining the glass transition temperature $T_g$ of the plastic basis material.

Time

According to another embodiment the granulates of the colored plastic article are exposed to the decoloring for about ≥ 1 minute to about ≤ 240 minutes, preferably about ≥ 5 minute to about ≤ 180 minutes, more preferably about ≥ 10 minute to about ≤ 60 minutes.

DETAILED DESCRIPTION OF THE EXAMPLES

The invention will be described in the following with reference to the exemplary examples 1a to 4a and the comparative examples 1b, 1c, 1d to 4b, 4c, 4d. Tables 3 to 6 specify the composition of the color masterbatch for the examples. The comparative examples are matched in the composition of the color masterbatch to the exemplary examples 1a to 4a, however in the comparative example 1b, 2b, 3b, 4b the coloring agent is not a lake pigment, in the comparative example 1c, 2c, 3c, 4c the water-soluble or water-swellable component is omitted, and in the comparative example 1d, 2d, 3d, 4d the coloring agent is not a lake pigment and the water-soluble or water-swellable component is omitted. The lake pigment used in the exemplary examples have a pure dye content of 20 - 25 wt%. In order to have a comparable dye content in the comparative examples where no lake pigment is used (comparative examples 1b, 2b, 3b, 4b and 1d, 2d, 3d, 4d) the acid dyes used in the comparative examples are used in a lower amount.

Colors can be described in the RGB or in the Lab color space. In the examples the coloration of the samples is determined in the Lab color space and measured with a Spectrometer Konika-Minolta CM-3600A - according to the guideline of the INSTRUCTION MANUAL CM-3600A (©2011-2013 KONICA MINOLTA, INC.). The Lab color can be converted into the RGB color.

The principle of the RGB color space

This principle is based on the three-color theory. The RGB color space works on the principle of the additive color space. This means that it reproduces the entire color range by mixing the basic colors red, green and blue.
The RGB color space can be found in all self-illuminating systems, such as monitors or television screens. All possible colors are defined by their red, green and blue components and mapped accordingly by the overlay of colored light.

The principle of the Lab color space

Unlike the RGB color space, the Lab color space is based on counter-color theory. This is based on the assumption that three separate chemical processes take place in the human retina, which always contain two opposite colors, the two opposite colors striving for balance with one another. An example pair would be the combination of blue and yellow. Lab is used, for example, for photo editing software. While the RGB color space is device-dependent, it is not the Lab color space. RGB includes - regardless of the device - all potentially possible colors, which above all enables the conversion of color definitions from one device to the other.

Convert RGB to Lab

It is important for the conversion that Lab coordinates separate brightness information L from the rest of the color information. RGB images do not have such a separation - a change in brightness therefore changes the entire color information.
Convert sRGB to Lab: http://colormine.org/convert/rgb-to-lab
Conversion Lab to sRGB: http://colormine.org/convert/lab-to-rgb

The Lab - measuring device

The Lab is measured with a - Spectrometer Konika-Minolta CM-3600A - according to the guideline of the INSTRUCTION MANUAL CM-3600A (©2011-2013 KONICA MINOLTA, INC.).

**a) Producing the colored plastic article**

For all examples the procedure for producing a colored plastic article is as follows:
A color masterbatch is produced by an extrusion process in a twin-screw extruder by mixing the individual components of the color masterbatch given in tables 3 to 6 in the specified weight ratios.

A colored plastic article in the form of a plate W x H x T = 30 x 50 x 1 $mm^3$ is produced in an extruder by an injection molding process by mixing a plastic basis material with the above color masterbatch, in a weight ratio of 96:4 (plastic basis material: color masterbatch), wherein the plastic basis material is PE (Lyondell Basell Hostalen ACP 5831 D).

The compositions of the color master batches are given in the following tables 3 to 6. With regard to the coloring agent, please refer to table 1 for the chemical structure of the dye in lake pigment. All lake pigments used are precipitates of the corresponding dye as aluminum salts.

Table 3

| **Example I** | | | |
|---|---|---|---|
| | **Carrier** | **Water-soluble polymer** | **Coloring agent** |
| 1a | ethyl-methacrylate-copolymer (Lotryl 18MA02) 74 wt% | Polyvinyl alcohol (Mowiflex M 05) 20 wt% | Lake Allura Red AC 6 wt% |
| 1b | ethyl-methacrylate-copolymer (Lotryl 18MA02) 78.5 wt% | Polyvinyl alcohol (Mowiflex M 05) 20 wt% | Allura Red AC 1.5 wt% |
| 1c | ethyl-methacrylate-copolymer (Lotryl 18MA02) 94 wt% | - | Lake Allura Red AC 6 wt% |
| 1d | ethyl-methacrylate-copolymer (Lotryl 18MA02) 98.5 wt% | - | Allura Red AC 1.5 wt% |

Table 4

| **Example II** | | | | | | |
|---|---|---|---|---|---|---|
| | **First carrier** | **Second carrier** | **Water-soluble polmyer** | **Crosslinking agent** | **Dispersing agent** | **Coloring agent** |
| 2a | LDPE 38 wt% | ethyl-methacrylate-copolymer (Lotryl 18MA02) 30 wt% | Polyvinyl alcohol (Mowiflex M 05) 20 wt% | MAA-grafted EVA (Orevac 18211) 1 wt% | acetyltributylcitrate (ATBC) 5 wt% | Lake Allura Red AC 6 wt% |
| 2b | LDPE 44.5 wt% | ethyl-methacrylate-copolymer (Lotryl 18MA02) 30 wt% | Polyvinyl alcohol (Mowiflex M 05) 20 wt% | MAA-grafted EVA (Orevac 18211) 1 wt% | acetyltributylcitrate (ATBC) 3 wt% | Allura Red AC 1.5 wt% |
| 2c | LDPE 49 wt% | ethylmethacrylate-copolymer (Lotryl 18MA02) 40 wt% | - | - | acetyltributylcitrate (ATBC) 5 wt% | Lake Allura Red AC 6 wt% |
| 2d | LDPE 55.5 wt% | ethyl-methacrylate-copolymer (Lotryl 18MA02) 40 wt% | - | - | acetyltributylcitrate (ATBC) 3 wt% | Allura Red AC 1.5 wt% |

Table 5

| Example III | | | | | | |
|---|---|---|---|---|---|---|
| | **First carrier** | **Second carrier** | **Water-soluble polymer** | **Water-swellable compound** | **Dispersing agent** | **Coloring agent** |
| 3a | LDPE<br>40 wt% | ethylmethacry latecopolymer (Lotryl 18MA02)<br>34 wt% | acrylamide-acrylic acidcopolymer; 80% acrylamide, Mw = 520.000; Mw/Mn = 3.5<br>13 wt% | internally cross-linked sodium carboxymethyl cellulose (Dupont: Ac-Di-Sol)<br>2 wt% | acetyltributylcitrate (ATBC)<br>5 wt% | Lake Tartrazine<br>6 wt% |
| 3b | LDPE<br>46.5 wt% | ethylmethacry latecopolymer (Lotryl 18MA02)<br>34 wt% | acrylamide-acrylic acidcopolymer; 80% acrylamide, Mw = 520.000; Mw/Mn = 3.5<br>13 wt% | internally cross-linked sodium carboxymethyl cellulose (Dupont: Ac-Di-Sol)<br>2 wt% | acetyltributylcitrate (ATBC)<br>3 wt% | Tartrazine<br>1,5 wt% |
| 3c | LDPE<br>47 wt% | ethylmethacry latecopolymer (Lotryl 18MA02)<br>42 wt% | - | - | acetyltributylcitrate (ATBC)<br>5 wt% | Lake Tartrazine<br>6 wt% |
| 3d | LDPE<br>53.5 wt% | ethylmethacry latecopolymer (Lotryl 18MA02)<br>42 wt% | - | - | acetyltributylcitrate (ATBC)<br>3 wt% | Tartrazine<br>1.5 wt% |

Table 6

| Example IV | | | | | | |
|---|---|---|---|---|---|---|
| | **First carrier** | **Second carrier** | **Water-soluble polymer** | **Water-swellable compound** | **Dispersing agent** | **Coloring agent** |
| 4a | LDPE<br>39 wt% | ethyl-methacrylate-copolymer (Lotryl 18MA02)<br>35 wt% | Polyvinyl pyrrolidone (BASF, Sokalan K30 P)<br>10 wt% | microcrystalline cellulose (MCC I, MCC SANAQ)<br>5 wt% | acetyltributylcitrate (ATBC)<br>5 wt% | Lake Brilliant Blue FCF<br>6 wt% |
| 4b | LDPE<br>45.5 wt% | ethyl-methacrylate-copolymer (Lotryl 18MA02)<br>35 wt% | Polyvinyl pyrrolidone (BASF, Sokalan K30 P)<br>10 wt% | microcrystalline cellulose (MCC I, MCC SANAQ)<br>5 wt% | acetyltributylcitrate (ATBC)<br>3 wt% | Brilliant Blue FCF<br>1.5 wt% |
| 4c | LDPE<br>49 wt% | ethyl-methacrylate-copolymer (Lotryl 18MA02)<br>40 wt% | - | - | acetyltributylcitrate (ATBC)<br>5 wt% | Lake Brilliant Blue FCF<br>6 wt% |

(continued)

| Example IV | | | | | | |
|---|---|---|---|---|---|---|
| | **First carrier** | **Second carrier** | **Water-soluble polymer** | **Water-swellable compound** | **Dispersing agent** | **Coloring agent** |
| 4d | LDPE | ethyl-methacrylate-copolymer (Lotryl 18MA02) | - | - | acetyltributylcitrate (ATBC) | Brilliant Blue FCF |
| | 55.5 wt% | 40 wt% | | | 3 wt% | 1.5 wt% |

**Color stability**

The color stability of the plastic articles produced according to the above exemplary examples 1a to 4a and comparative examples 1b, 1c, 1d to 4b, 4c, 4d was evaluated by different migration tests. The following table 7 summarizes the migration tests (MT) that have been carried out:

| Table 7: Migration Tests | | | | |
|---|---|---|---|---|
| | | Medium/regulation | Temperature | Duration |
| Contact Migration Test | MT 1.1 | PVC | 50 °C | 5 h |
| | MT 1.2 | According to DIN EN ISO 105-E04 | | |
| Extraction Migration Tests | MT 2.1 | Ethanol 95% | 60 °C | 2 h |
| | MT 2.2 | Acetic Acid 3% | 60 °C | 2 h |
| | MT 2.3 | NaOH 2% | 60 °C | 2 h |
| | MT 2.4 | Ethanol 20% and Acetic acid 3% | 50 °C | 24 h |
| | MT 2.5 | According to DIN EN ISO 105-C06 C2S | | |

Contact Migration Test MT 1.1 and MT 1.2

The contact migration test MT 1.1 is performed by means of a perspirometer. The individual test specimens are covered on both sides with monomer-softened white PVC and clamped into the perspirometer separated by acrylic plates. The perspirometer remains in a heating cabinet at 50 °C for 5 hours. After taking out the samples, the evaluation is carried out by visual assessment of the change in color of the soft PVC. The contact migration test MT 1.2 was carried out according to DIN EN ISO 105-E04.

Extraction Migration Test MT 2.1 to 2.5

For the Extraction Migration Tests MT 2.1 to 2.4 the plastic article was extracted in a round bottom flask with reflux condenser under stirring in the specified medium and for the specified time. The plastic article was then removed from the extraction medium and rinsed under warm water. The extraction medium and the plastic article are evaluated visually and/or by measuring the color intensity in comparison before and after. The Extraction Migration Test MT 2.5 was carried out according to DIN EN ISO 105-C06 C2S.

The color stability of the plastics articles within the migration tests was assessed by visually comparing the color of the extraction medium before and after the migration test, the polar decoloring agent before and after the migration test and/or the percentage loss of color strength K/S according to Kubelca-Munk of the plastic article before and after the migration test. The polar decoloring agent is a poly amide (PA6, melting point 220°C, viscosity number (acc. to ISO307; 96% sulfuric acid) 187 -203 g/cm$^3$; spherical granulate with diameter 2,0 - 2,5mm). Color strength according to Kubelca-Munk was measured and calculated by the spectrophotometer Konica-Minolta 3600A at max. absorbance. The remaining color strength is calculated as follows:

$$reamining\ color\ strength = 1 - \frac{(color\ strength\ before - color\ strength\ after)}{color\ strength\ before}\ in\ \%$$

*(before = before decoloring; after = after decoloring)*

According to Kubelka-Munk, there is a linear relationship between the color strength and the dye content or concentration in a plastic. Therefore, a remaining color strength in percent after decoloration corresponds to the remaining dye content or the dye concentration after decoloration.

The assessment of the migration tests was rated by points according to the following Table 8:

Table 8

| Points | Visual inspection of medium | Visual inspection of polar decoloring agent | Remaining color strength of plastic article |
|---|---|---|---|
| 1 | Medium unchanged clear, transparent | Polar decoloring agent unchanged colorless | Plastic article not decolored, remaining color intensity ≥ 90% |
| 2 | Medium weakly colored and color only visible against white background | Polar decoloring agent weakly colored and color only visible against white background | Plastic article decolored, remaining color intensity ≥ 75% and < 90% |
| 3 | medium recognizable colored | Polar decoloring agent recognizable colored | Plastic article well decolored, remaining colour intensity ≥ 50% and < 75% |
| 4 | medium well recognizable colored | Polar decoloring agent well recognizable colored | Plastic article very well decolored, remaining colour intensity ≥ 30% and < 50% |
| 5 | Medium heavily colored | Polar decoloring agent heavily colored | Plastic article highly decolored, remaining colour strength < 30% |

The numbers in the left column are counted as points in the evaluation. The smaller the total number of points, the higher the color stability.

As shown in tables 9 and 10 the following results for the color stability of the plastic article have been found:

Table 9

| | **1a** | **1b** | **1c** | **1d** | **2a** | **2b** | **2c** | **2d** |
|---|---|---|---|---|---|---|---|---|
| **MT 1.1** | 1 | 1 | 1 | 1 | 1 | 1 | 1 | 1 |
| **MT 1.2** | 1 | 1 | 1 | 1 | 1 | 1 | 1 | 1 |
| **MT 2.1** | 2 | 3 | 1 | 1 | 2 | 3 | 1 | 1 |
| **MT 2.2** | 1 | 2 | 1 | 2 | 2 | 3 | 1 | 2 |
| **MT 2.3** | 2 | 2 | 1 | 1 | 1 | 2 | 1 | 1 |
| **MT 2.4** | 2 | 3 | 1 | 2 | 3 | 3 | 1 | 2 |
| **MT 2.5** | 1 | 3 | 1 | 1 | 2 | 3 | 1 | 1 |
| **TOTAL** | **11** | **15** | **7** | **9** | **12** | **16** | **7** | **9** |

Table 10

| | 3a | 3b | 3c | 3d | 4a | 4b | 4c | 4c |
|---|---|---|---|---|---|---|---|---|
| **MT 1.1** | 1 | 1 | 1 | 1 | 1 | 1 | 1 | 1 |
| **MT 1.2** | 1 | 1 | 1 | 1 | 1 | 1 | 1 | 1 |
| **MT 2.1** | 1 | 3 | 1 | 1 | 1 | 2 | 1 | 1 |
| **MT 2.2** | 2 | 3 | 1 | 2 | 1 | 2 | 1 | 2 |
| **MT 2.3** | 1 | 2 | 1 | 1 | 1 | 2 | 1 | 1 |
| **MT 2.4** | 2 | 3 | 1 | 2 | 2 | 2 | 1 | 2 |
| **MT 2.5** | 2 | 3 | 1 | 1 | 1 | 2 | 1 | 1 |
| **TOTAL** | **10** | **16** | 7 | **9** | **8** | **12** | 7 | **9** |

MT 1.1 - MT 2.5: Assessment of the coloring of the extraction medium and the polar decoloring agent (see tables 7 and 8). The numbers in the column are counted as points in the evaluation. The lower the total number of points (row TOTAL), the higher the color stability (see table 8).

b) **Decoloring of the plastic articles**

The plastic articles produced according to the above exemplary examples 1a to 4a and comparative examples 1b, 1c, 1d to 4b, 4c, 4d have been decolored according to the following procedure:
For the decoloring of the plastic article, the plastic article is shredded to a fine granulate having a mean particles size of approximately 2 mm. The granulate is exposed to a decoloring bath. The composition of the decoloring bath is given in table 11. The concentrations in table 11 are given with respect to the volume of the decoloring bath.

When using one of the decoloring baths 1 to 3, the granulate is exposed to the decoloring bath for 60 min at 130 °C. When using the decoloring bath 4 the granulate is exposed to the decoloring bath for 240 min at 130 °C. The ratio of granulate to the amount of decoloring bath is 10g granulates per 250g decoloring bath.

After the above exposure time of the granulate in the decoloring bath and after rapid cooling, the granulates are filtered off with a coarse sieve and thoroughly rinsed with running water and dried at 80 °C for 6h. Again, plastic articles in the form of a plates W x H x T = 30 x 50 x 1 $mm^3$ are produced from the decolorized granulate by injection molding.

After the above decoloring process, the color and the remaining color strength is determined by spectrophotometer (for detailed description of the color strength, see section color stability of plastic article).

The decolorability of the plastic articles was determined by measuring the percentage loss of color strength K/S according to Kubelca-Munk of the colored plates before decoloring comparing this value with the color strength of the plastic articles produced from the decolorized granulates. Color strength according to Kubelca-Munk was measured and calculated by the spectrophotometer Konica-Minolta 3600A at max. adsorbance. The remaining color strength is calculated as follows:

$$reamining\ color\ strength = 1 - \frac{(color\ strength\ before - color\ strength\ after)}{color\ strength\ before}\ in\ \%$$

*(before = before decoloring; after = after decoloring and regranulation)*

According to Kubelka-Munk, there is a linear relationship between the color strength and the color content or concentration in a plastic. Therefore, a remaining color strength in percent after decolorisation corresponds to the remaining coloring agent content or the coloring agent concentration after decolorisation.

Table 11: Composition of decoloring bath 1 to 4

| Nr. | Polar solvents, nonpolar solvents, and levelling agent in water | Reducing agent | Oxidizing agent | Polar decoloring agent | pH, adjusted by |
|---|---|---|---|---|---|
| 1 | 4 mL/L mixture of benzyl benzoate and $C_9$-aromatic hydrocarbons 1 : 2<br>100 mL/L caustic soda lye (NaOH) 38 °Bé in water; concentration of NaOH: 1,1 mol/L | 5 g/L formamidine sulfinic acid | | | > 12, adjusted by NaOH, |
| 2 | 4 mL/L mixture of benzyl benzoate and $C_9$-aromatic hydrocarbons 1 : 2<br>100 mL/L formic acid 85% in water, concentration of formic acid: 2,2 mol/L | 7,5 g/L zinc hydroxymethanesulfinate | | | < 2, adjusted by HCl |
| 3 | 4 mL/L mixture of benzyl benzoate and $C_9$-aromatic hydrocarbons 1 : 2 | | 10 g/L peroxidisulfate<br>10g/L tetraacetylethylenediamin (TAED) | | > 12, adjusted by NaOH |
| 4 | 4 mL/L mixture of benzyl benzoate and $C_9$-aromatic hydrocarbons 1 : 2<br>100 mL/L formic acid 85% in water, concentration of formic acid in the water: 2,2 mol/L | | | 20g/L of poly (amidoamineco-acrylic acid) copolymer in form of particles having a mean particle size diameter of 1 mm | < 2, adjusted by HCl |

**Decoloring of Examples 1a, 1b, 1c, 1d**

Plastic articles produced according to examples 1a, 1b, 1c and 1d are decolored with the decoloring bath Nr. 2.

Decoloring of Example 1a

For the decoloring of the plastic article produced according to example 1a, the above-described procedure is performed with the decoloring bath Nr. 2.

The plates produced from the decolored granulates are slightly reddish - CIELab: 75/35/14; RGB: 254/158/161 determined by spectrophotometer and show nearly the same coloration (Δ(remaining color strength) ≤ 50%) as the plates produced from the decolored granulate of the comparative example 1b.

The remaining color agent in the decolorized plates produced from the decolored granulates was less than 20 wt.-%, based on 100 wt.-% of the color agent of the colored plastic article before decolorization.

Decoloring of Example 1b

The plates from the comparative example 1b were subjected to the same decolorization procedure as example 1a. A slightly lower residual coloration compared to 1a was found - CIELab: 83/31/10; RGB: 255/185/189 in the plates produced from the decolored granulates, determined by spectrophotometer.

The remaining color agent in the in the plates produced from the decolored granulates was less than 20 wt.-%, based on 100 wt.-% of the color agent of the colored plastic article before decolorization.

Decoloring of Example 1c and 1d

The plates from the comparative examples 1c and 1d were subjected to the same decolorization procedure as example 1a. The plates produced from the decolored granulates retain their color and are almost not decolorized.

The remaining color agent in the in the plates produced from the decolorized granulates was more than 90 wt.-%, based on 100 wt.-% of the color agent of the colored plastic article before decolorization.

**Decoloring of Examples 2a, 2b, 2c, 2d**

Plastic articles produced according to examples 2a, 2b, 2c and 2d are decolored with the decoloring bath Nr. 1 and with the decoloring bath Nr. 3.

Decoloring with decoloring bath Nr.1 of Example 2a

For the decoloring of the plastic article produced according to example 2a, the above-described procedure is performed with the decoloring bath Nr. 1.

The plates produced from the decolored granulates are slightly reddish - CIELab: 80/37/13; RGB: 255/171/176 determined by spectrophotometer and show nearly the same coloration (Δ(remaining color strength) ≤ 50%) as the plates produced from the decolored granulate of the comparative example 2b, when decolored with decoloring bath Nr.1.

The remaining color agent in the plates produced from the decolorized granulates was less than 20 wt.-%, based on 100 wt.-% of the color agent of the colored plastic article before decolorization.

Decoloring with decoloring bath Nr.1 of Example 2b

The plates from the comparative example 2b were subjected to the same decolorization procedure with decoloring bath Nr. 1 as example 2a. A slightly lower residual coloration compared to 2a was found - CIELab: 85/35/10; RGB: 255/187/195, determined by spectrophotometer.

The remaining color agent in the plates produced from the decolorized granulates was less than 20 wt.-%, based on 100 wt.-% of the color agent of the colored plastic article before decolorization.

Decoloring with decoloring bath Nr.1 of Example 2c and 2d

The plates from the comparative examples 2c and 2d were subjected to the same decolorization procedure as example 2a with decoloring bath Nr. 1. The plates produced from the decolorized granulates retain their color and are almost not decolorized.

The remaining color agent in the plates produced from the decolorized granulates was more than 90 wt.-%,

based on 100 wt.-% of the color agent of the colored plastic article before decolorization.

Decoloring with decoloring bath Nr.3 of Example 2a

For the decoloring of the plastic article produced according to example 2a, the above-described procedure is performed with the decoloring bath Nr. 3.

The plates produced from the decolorized granulates are slightly reddish - CIELab: 81/36/12; RGB: 255/175/180 determined by spectrophotometer and show nearly the same coloration ($\Delta$(remaining color strength) $\leq$ 50%) as the plates produced from the decolorized granulate of the comparative example 2b, when decolored with decoloring bath Nr.3.

The remaining color agent in the plates produced from the decolorized granulates was less than 20 wt.-%, based on 100 wt.-% of the color agent of the colored plastic article before decolorization.

Decoloring with decoloring bath Nr.3 of Example 2b

The plates from the comparative example 2b were subjected to the same decolorization procedure with decoloring bath Nr. 3 as example 2a. A slightly lower residual coloration compared to 2a was found - CIELab: 84/35/11; RGB: 255/184/180, determined by spectrophotometer.

The remaining color agent in the plates produced from the decolorized granulates was less than 20 wt.-%, based on 100 wt.-% of the color agent of the colored plastic article before decolorization.

Decoloring with decoloring bath Nr.3 of Example 2c and 2d

The plates from the comparative examples 2c and 2d were subjected to the same decolorization procedure as example 2a with decoloring bath Nr. 3. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

**Decoloring of Examples 3a, 3b, 3c, 3d**

Plastic articles produced according to examples 3a, 3b, 3c and 3d are decolored with the decoloring bath Nr. 2 and with the decoloring bath Nr. 4.

Decoloring with decoloring bath Nr.2 of Example 3a

For the decoloring of the plastic article produced according to example 3a, the above-described procedure is performed with the decoloring bath Nr. 2.

The plates produced from the decolorized granulates are slightly yellowish - CIELab: 87/0/30; RGB: 239/216/161 determined by spectrophotometer and show nearly the same coloration ($\Delta$(remaining color strength) $\leq$ 50%) as the plates produced from the decolorized granulate of the comparative example 3b, when decolored with decoloring bath Nr.2.

The remaining color agent in the plates produced from the decolorized granulates was less than 20 wt.-%, based on 100 wt.-% of the color agent of the colored plastic article before decolorization.

Decoloring with decoloring bath Nr.2 of Example 3b

The plates from the comparative example 3b were subjected to the same decolorization procedure with decoloring bath Nr. 2 as example 3a. A slightly lower residual coloration compared to 3a was found - CIELab: 93/0/25; RGB: 253/233/187, determined by spectrophotometer.

The remaining color agent in the plates produced from the decolorized granulates was less than 20 wt.-%, based on 100 wt.-% of the color agent of the colored plastic article before decolorization.

Decoloring with decoloring bath Nr.2 of Example 3c and 3d

The plates from the comparative examples 3c and 3d were subjected to the same decolorization procedure with decoloring bath Nr. 2 as example 3a. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

Decoloring with decoloring bath Nr.4 of Example 3a

For the decoloring of the plastic article produced according to example 3a, the above-described procedure is performed with the decoloring bath Nr. 4.

The plates produced from the granulates are yellowish - CIELab: 83/2/30; RGB: 231/204/150 determined by spectrophotometer and show almost the same coloration (Δ(remaining color strength) ≤ 50%) as the plates produced from the granulate of the comparative example 3b, when decolored with decoloring bath Nr.4.

The remaining color agent in the plates produced from the decolorized granulates was less than 20 wt.-%, based on 100 wt.-% of the color agent of the colored plastic article before decolorization.

Decoloring with decoloring bath Nr.4 of Example 3b

The plates from the comparative example 3b were subjected to the same decolorization procedure with decoloring bath Nr. 4 as example 3a. A slightly lower residual coloration compared to 3a was found - CIELab: 90/0/27; RGB: 246/225/175, determined by spectrophotometer.

The remaining color agent in the plates produced from the decolorized granulates was less than 20 wt.-%, based on 100 wt.-% of the color agent of the colored plastic article before decolorization.

Decoloring with decoloring bath Nr.4 of Example 3c and 3d

The plates from the comparative examples 3c and 3d were subjected to the same decolorization procedure with decoloring bath Nr. 4 as example 3a. The plates produced from the granulates retain their color and are almost not decolorized.

The remaining color agent in the plates produced from the decolorized granulates was more than 90 wt.-%, based on 100 wt.-% of the color agent of the colored plastic article before decolorization.

**Decoloring of Examples 4a, 4b, 4c, 4d**

Plastic articles produced according to examples 4a, 4b, 4c and 4d are decolored with the decoloring bath Nr. 2.

Decoloring of Example 4a

For the decoloring of the plastic article produced according to example 4a, the above-described procedure is performed with the decoloring bath Nr. 2.

The plates produced from the granulates are slightly blueish - CIELab: 79/13/-90; RGB: 183/191/255 determined by spectrophotometer and show nearly the same coloration (Δ(remaining color strength) ≤ 50%) as the plates produced from the granulate of the comparative example 4b.

The remaining color agent in the plates produced from the decolorized granulates was less than 20 wt.-%, based on 100 wt.-% of the color agent of the colored plastic article before decolorization.

Decoloring of Example 4b

The plates from the comparative example 4b were subjected to the same decolorization procedure as example 4a. A slightly lower residual coloration compared to 4a was found - CIELab: 84/7/-99; RGB: 195/208/255, determined by spectrophotometer.

The remaining color agent in the plates produced from the decolorized granulates was less than 20 wt.-%, based on 100 wt.-% of the color agent of the colored plastic article before decolorization.

Decoloring of Example 4c and 4d

The plates from the comparative examples 4c and 4d were subjected to the same decolorization procedure as example 4a. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

The following table 12 summarizes the results found for the decoloration process.

| Table 12 | | | | |
|---|---|---|---|---|
| **Example** | **1a** | **1b** | **1c** | 1d |
| Remaining K/S Decoloring bath Nr. 2 | 19% | 18% | >90% | > 90% |
| **Example** | **2a** | **2b** | **2c** | **2d** |
| Remaining K/S Decoloring bath Nr. 1 | 18% | 17% | >90% | >90% |
| Remaining K/S Decoloring bath Nr. 3 | 19% | 18% | >90% | >90% |
| **Example** | **3a** | **3b** | **3c** | **3d** |
| Remaining K/S Decoloring bath Nr. 2 | 15% | 17% | >90% | >90% |
| Remaining K/S Decoloring bath Nr. 4 | 19% | 18% | >90% | >90% |
| **Example** | **4a** | **4b** | **4c** | **4d** |
| Remaining K/S Decoloring bath Nr. 2 | 19% | 18% | >90% | >90% |

As the results clearly show, the color stability of the plastic article is enhanced by using the lake pigment instead of the corresponding Acid Dyes without affecting the decolorability of the plastic article. Decoloring is not only possible with the addition of an oxidizing agent, but also with a reduction agent or a polar decoloring agent.

## Claims

**1.** Color masterbatch for producing colored plastic articles, wherein the color masterbatch comprises:

- at least one carrier,
- at least one coloring agent, and
- at least one water-soluble or water-swellable component;

wherein the at least one carrier is an organic polymer having a molecular weight Mw ≥ 1000 g/mol and wherein the organic polymer is insoluble in water,
wherein an amount of the water-soluble or water-swellable component in the color masterbatch is ≥ 1 wt% to ≤ 50 wt%, based on the total weight of the color masterbatch,
wherein the coloring agent is a lake pigment, and
wherein a weight ratio of the coloring agent to the water-soluble or water-swellable component in the color masterbatch is 1:2 to 1:200.

**2.** The color masterbatch according to claim 1, wherein the at least one carrier is selected from the group comprising thermoplastic and thermoplastic elastomer and/or the carrier is not a thermosetting polymer.

**3.** The color masterbatch according to claim 1 or 2, wherein the coloring agent is selected from the lake pigments comprising aluminum, barium and calcium salts.

**4.** The color masterbatch according to any of the previous claims, wherein a dye of the lake pigment is an organic molecule having an aromatic structure and wherein the dye has a molecular weight Mw in the range of about ≥ 250 g/mol to about ≤ 800 g/mol.

**5.** The color masterbatch according to any of the previous claims, wherein the coloring agent is a lake pigment allowed as food color in the European Union and/or the United States of America.

**6.** The color masterbatch according to any of the previous claims, wherein the water-soluble or water-swellable component is a water-soluble polymer, a water-swellable compound, a disintegrating agent, or a mixture thereof, wherein

- the water-soluble polymer has a molecular weight Mw ≥ 1000 g/mol, wherein the water-soluble polymer has a weight loss of more than 2 wt% when stored in water at 23°C for 24 hours or when emerged in boiling water

for 30 min; and/or the water-soluble polymer has a molecular weight Mw ≥ 1000 g/mol and is selected from the group comprising polyelectrolytes, non-ionic homopolymers, hydrophobic-associating polymers, and water soluble polysiloxanes;

- the water-swellable compound is an inorganic compound or is a polymer having a molecular weight Mw ≥ 1000 g/mol and wherein the water swellable compound has a swelling capacity of ≥ 25 wt%, according to ASTM D570 and/or ISO 62; and/or the water-swellable compound is selected from the group comprising bentonite, preferably montmorillonite; cross-linked poly acrylamide and its copolymers, starch, cellulose, cellulose derivatives, crosscarmellose, sodium croscarmellose, crospovidone, sodium starch glycolate, alginic acids, dextrans and cross-linked polyvinylpyrrolidones, cross-linked poly(vinyl alcohol) and copolymers, cross-linked polyethylene oxide and starch grafted copolymer of polyacrylonitrile;
- the disintegrating agent has a molecular weight Mw≥ 1000 g/mol, wherein the disintegrating agent has a weight loss of more than 2 wt% when stored in water having a pH ≥ 10 or a pH ≤ 4 for 24 hours at 80°C; and/or the disintegrating agent is selected from the group comprising poly glycolide, polylactide, poly hydroxy propionate, poly hydroxy butyrate, poly ε-caprolactone, glycolized or amorphous aliphatic-aromatic polyesters, glycolized or amorphous polyethylene terephthalate (PET-G or A-PET), polytrimethylenterephthalte (PTT) and polybutylenterephthalate (PBT).

**7.** The color masterbatch according to any of the previous claims, wherein the color masterbatch further comprises in an amount of ≥ 0.1 wt% to ≤ 10 wt% based on the total weight of the color masterbatch

- an organic acid having a melting point $T_m$ > 100 °C and a solubility in double-distilled water and/or alkaline solution > 0.1 kg/L at 25 °C, such as tartaric acid, citric acid; aminoor hydroxy- substituted straight, branched, saturated and/or unsaturated, aliphatic C5 to C9 carboxylic acids such as hydroxyvaleric acid and hydroxycaproic acid, C4 to C7 dicarbonic acids like glutaric acid or adipic acid; and/or
- a salt selected from the group comprising

a) inorganic salts of alkali metals, alkaline earth metals, and/or elements of the 3$^{rd}$ main group of the PSE such as sodium chloride and sodium nitrate;
b) organic salts of alkali metals and/or alkaline earth metals of carboxylic acids such as acetate, citrate, tartrate, and branched, saturated and/or unsaturated, aliphatic C5 to C9 carboxylic acids such as valeric acid and caproic acid; and
c) hydroxides of alkali metals, alkaline earth metals, and Aluminum, such as NaOH, $Mg(OH)_2$, and $Al(OH)_3$.

**8.** The color masterbatch according to any of the previous claims, wherein the color masterbatch further comprises in an amount of ≥ 0.1 wt% to ≤ 10 wt% based on the total weight of the color masterbatch a gas generator selected from the group comprising hydrogen carbonates and carbonates such as $NaHCO_3$ and $Na_2CO_3$.

**9.** The color masterbatch according to any of the previous claims, wherein the color masterbatch further comprises a crosslinking agent in an amount of ≥ 0.1 wt% to ≤ 10 wt%, based on the total weight of the color masterbatch, wherein the crosslinking agent is selected from the group comprising glycidyl acrylates copolymers, maleic acid anhydride copolymers, polymers and copolymers grafted with maleic acid anhydride, like of PE, PP or EMA grafted with maleic anhydride, glyoxal, glyoxal resins, polyamidoamin epichlohydrine, modified or non-modified melamine formaldehyde resins, Ti-lactate, boric acid, sodium aluminate, ammonium zirconium carbonate.

**10.** The color masterbatch according to any of the previous claims, wherein the color masterbatch further comprises a dispersing agent in an amount of ≥ 0.3 wt% to ≤ 25 wt%, based on the total weight of the color masterbatch, wherein the dispersing agent is selected from the group comprising ionic dispersing agents, and non-ionic dispersing agents.

**11.** Mixture comprising a color masterbatch according to any of claims 1 to 10 and a plastic basis material in a weight ratio of 20:80 to 1:99 (color masterbatch: plastic basis material), wherein the plastic basis material comprises at least one basis polymer having a molecular weight Mw ≥ 1000 g/mol.

**12.** Mixture according to claim 11, wherein the plastic basis material is selected from the group comprising thermoplastic and thermoplastic elastomer and/or the plastic basis material is not a thermosetting polymer; and/or
the basis polymer is selected from the group comprising thermoplastic and thermoplastic elastomer and/or the basis polymer is not a thermosetting polymer.

**13.** Method for producing a colored plastic article comprising the steps:

a) Mixing a color masterbatch according to any of claims 1 to 10 with a plastic basis material in an extruder in a weight ratio of 20:80 to 1:99 (color masterbatch: plastic basis material), wherein the plastic basis material comprises at least one basis polymer having a molecular weight Mw ≥ 1000 g/mol, or
b) Providing a mixture according to claim 11 or 12 in an extruder, and
c) Forming the colored plastic article by a polymer processing technique.

**14.** The method according to claim 13, wherein the polymer processing technique is selected from thermoplastic processing techniques, such as injection molding, compression molding, calendaring, extrusion, film extrusion processing method, blown cast processing method, calandered films processing method, thermoforming sheets processing method, foam extrusion processing method, profile extrusion processing method, injection blow molding processing method, injection stretch blow molding processing method, compression molding processing method, extruding processing method, thermoforming processing method, blowing processing method and/or 3D-printing processing method.

**15.** Colored plastic article produced by a method according to any of claims 13 to 14.

**16.** Colored plastic article comprising

- a plastic basis material comprising at least one basis polymer,
- at least one carrier,
- at least one coloring agent,
- at least one water-soluble or water-swellable component,

wherein the amount of the plastic basis material in the colored plastic article is ≥ 80 wt% to ≤ 99 wt%, based on the total weight of the colored plastic article,
wherein the amount of the at least one water-soluble or water-swellable component in the colored plastic article is ≥ 0.01 wt% to ≤ 10 wt%, based on the total weight of the colored plastic article,
wherein the at least one basis polymer and the at least one carrier is an organic polymer having a molecular weight Mw ≥ 1000 g/mol and wherein the carrier is insoluble in water,
wherein the coloring agent is a lake pigment, and
wherein a weight ratio of the coloring agent to the water-soluble or water-swellable component in the colored plastic article is 1:2 to 1:200.

**17.** Colored plastic article according to claim 15 or 16, wherein the plastic article is color stable under any or any combination of the following conditions:

- exposure to water for 12h at 65°C;
- exposure to a 2% alkaline solution of NaOH for 2 h at 60 °C;
- exposure to a 3% acid solution of acetic acid for 2 h at 60 °C;
- fastness to washing according to DIN EN ISO 105-C06 C2S;
- fastness to perspiration according to DIN EN ISO 105-E04;
- exposure to a solution of 20% ethanol and 3% acetic acid in water for 24 h at 50 °C.

**18.** Colored plastic article according to any one of claims 15 to 17, wherein the plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

**19.** Colored plastic article according to any one of claims 15 to 18, wherein the plastic article is selected from the group comprising a sheet, a foil, a container, a part, a tube, a profile, a nonwoven fabric, and preferably the article is selected from the group comprising rigid packaging such as bottles, jars, caps and closures, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

**20.** Method for decoloring a colored plastic article according to any of claims 15 to 19, comprising the steps of

a) shredding the colored plastic article to a granulate and/or a powder,
b) exposing the granulate and/or powder to a decoloring bath for about ≥ 1 minute to about ≤ 240 minutes, wherein the decoloring bath has a temperature above a glass transition temperature $T_g$ of the colored plastic article and below a melting temperature $T_m$ of the colored plastic article and/or has a temperature ≥ 80 °C to ≤ 130 °C,

wherein the decoloring bath comprises

- water,
- at least one polar solvent, and
- an oxidizing agent or a reducing agent and/or a polar decoloring agent,

wherein the decoloring bath has a pH about ≥ 10 or about ≤ 4 , and wherein the pH of the decoloring bath is adjusted by adding a base, preferably NaOH and/or an acid, preferably HCl.

**21.** Method according to claim 20, wherein the decoloring bath comprises the polar decoloring agent and has a pH about ≤ 4, and wherein the pH of the decoloring solution is adjusted by adding an acid, preferably HCl.

**22.** The method according to any of claims 20 to 21, wherein the polar solvent is liquid at about 23 °C and is selected from polar organic solvents; wherein the polar organic solvent is selected from the group comprising $C_1$ to $C_6$ - alcohol, preferably ethanol and isopropanol, glycols such as diethylene glycol and its oligomers, $C_3$ to $C_6$ - ketone, preferably acetone, $C_2$ to $C_6$ - aldehyde, $C_1$ to $C_6$ - carboxylic acid, such as formic acid, and derivatives of $C_1$ to $C_6$ - carboxylic acids such as acid chlorides or acid amides, other polar solvents liquid at 23 °C, preferably DMSO, DMF, benzylic alcohol, linear or cyclic aliphatic ethers, preferably diethyl ether, diisopropyl ether, dibutylether or tetrahydrofuran, aliphatic esters such as ethyl acetate, halogenated solvents such as dichloromethane, trichloromethane or benzyl chloride.

**23.** The method according to any of claims 20 to 22, wherein the decoloring bath further comprises a nonpolar solvent, wherein the nonpolar solvent is liquid at about 23 °C and is selected from nonpolar organic solvents; wherein the nonpolar organic solvent is selected from the group comprising straight, branched, saturated, unsaturated, and/or cyclic aliphatic $C_5$ to $C_{12}$ hydrocarbons, and aromatic $C_6$ to $C_{12}$ hydrocarbons.

**24.** Method according to any of claims 20 to 23, wherein the reducing agent is selected from the group comprising

- hydrogen in combination with precious metal catalyst, preferably $H_2$/Ni, $H_2$/Pd, $H_2$/Pt, hydrides;
- complex hydrides, preferably sodium hydride NaH, lithium aluminum hydride $LiAlH_4$, borohydride salts $NaBH_4$;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfonic acid, zinc hydroxymethanesulfinate, sodium hydroxymethanesulfinate also known as rongalite, thiourea dioxide also known as thiox, sulfonic acid and its derivatives, sodium carbonate, sodium bicarbonate, sodium oxide, calcium oxide;
- sulfinic acid and sulfinic acid derivates, preferably aminoimino methansulfinic acid;
- glucose mixtures with dispersants; and
- formamidine sulphinic acid and zinc hydroxymethanesulfinate.

**25.** Method according to any of claims 20 to 24, wherein the oxidizing agent is selected from the group comprising peroxide, peroxyacetic acid, hydrogen peroxide, peroxodisulfate, ozone, sodium percarbonate, sodium perborate, m-Nitrobenzolsulfonat, $H_2SO_4$, $HNO_3$, oxygencontaining anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce^{4+}$, noble metal ions such as those of silver and copper, anions of halo-oxygen acids such as bromat $BrO3^-$, halogens, such as fluorine, chlorine, bromine and iodine, hypochlorite, sodium hypochlorite, and/or potassium hypochlorite; hypochlorous acid.

**26.** Method according to any of claims 20 to 25, wherein the polar decoloring agent is selected from the group comprising

- at least one polar-polymer having a Mw of about ≥ 1000 g/mol, and/or
- at least one polar compound having a Mw of about < 1000 g/mol,

wherein the polar-polymer comprises at least ≥ 5 wt.-% of heteroatoms, based on the weights of the polar-polymer, and wherein the polar compound comprises at least ≥ 5 wt.-% of heteroatoms, based on the weight of the polar compound,
wherein heteroatoms are any atom excluding C-atoms and H-atoms.

**27.** Method according to any of claims 20 to 26, wherein the decoloring bath comprises a levelling agent selected from the group comprising aromatic esters such as benzoic acid esters such as benzyl benzoate, alkyl benzoates such as methyl or ethyl benzoate, naphthalic acid esters, phthalic acid esters, polyphenylether, phenoles, aromatic alcohols, aromatic ketones, aryl halides, such as halogenized benzene, halogenzide toluene; N-alkylphthalimide, methylnaphthaline, diphenyle, diphenylether, naphtholether, and oxybiphenyle.

**28.** Method according any of claims 20 to 27, wherein the colored plastic article is shredded to a granulate and/or powder having a mean particle size of 0.1 mm to 20 mm.

**29.** Method according to any of claims 20 to 28, wherein a weight ratio of the granulate and/or powder to the decoloring bath is 1:2 to 1:50 (granulate and/or powder : decoloring bath).

Europäisches Patentamt
European Patent Office
Office européen des brevets

# EUROPEAN SEARCH REPORT

Application Number
EP 21 16 5455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2018 163288 A (TOYO INK SC HOLDINGS CO LTD) 18 October 2018 (2018-10-18)<br>* abstract *<br>* paragraph [0038] *<br>* Pigment dispersions GP-1 and GP-2 *<br>* claim 1 *<br>----- | 1-29 | INV.<br>C08J3/20<br>C08J3/22 |
| A | EP 0 902 061 A2 (CIBA GEIGY AG [CH]) 17 March 1999 (1999-03-17)<br>* claim 1 *<br>----- | 1-29 | |
| A | EP 3 770 208 A1 (SMART COLORING GMBH [DE]) 27 January 2021 (2021-01-27)<br>* claims 1-28 *<br>----- | 1-29 | |

TECHNICAL FIELDS SEARCHED (IPC)

C08J

The present search report has been drawn up for all claims

2

| Place of search | Date of completion of the search | Examiner |
|---|---|---|
| Munich | 8 September 2021 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 16 5455

This annex lists the patent family members relating to the patent documents cited in the above-mentioned European search report. The members are as contained in the European Patent Office EDP file on
The European Patent Office is in no way liable for these particulars which are merely given for the purpose of information.

08-09-2021

| Patent document cited in search report | Publication date | Patent family member(s) | Publication date |
|---|---|---|---|
| JP 2018163288 A | 18-10-2018 | NONE | |
| EP 0902061 A2 | 17-03-1999 | CA 2246543 A1 | 08-03-1999 |
| | | CN 1210873 A | 17-03-1999 |
| | | DE 69838832 T2 | 04-12-2008 |
| | | EP 0902061 A2 | 17-03-1999 |
| | | IN 220164 B | 11-07-2008 |
| | | JP H11148024 A | 02-06-1999 |
| | | KR 19990029585 A | 26-04-1999 |
| | | MX 204483 B | 01-10-2001 |
| EP 3770208 A1 | 27-01-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 13332008 A